# EUROPÄISCHE PATENTSCHRIFT

(11) **EP 4 245 402 B1**
(45) Veröffentlichungstag und Bekanntmachung des Hinweises auf die Patenterteilung: **29.01.2025**
(21) Anmeldenummer: 22162889.4
(22) Anmeldetag: 18.03.2022
(51) Int. Cl.: B01D 53/14, C01B 3/52, C10K 1/00, B01D 53/26

(54) **VERFAHREN UND ANLAGE ZUR ENTFERNUNG VON KOHLENDIOXID UND WASSER AUS SYNTHESEGAS**
METHOD AND SYSTEM FOR REMOVING CARBON DIOXIDE AND WATER FROM SYNTHESIS GAS
PROCÉDÉ ET INSTALLATION D'ÉLIMINATION DU DIOXYDE DE CARBONE ET DE L'EAU DU GAZ DE SYNTHÈSE

(43) Veröffentlichungstag der Anmeldung: 20.09.2023
(73) Patentinhaber: L'AIR LIQUIDE, SOCIETE ANONYME POUR L'ETUDE ET L'EXPLOITATION DES PROCEDES GEORGES CLAUDE, 75007 Paris (FR)
(72) Erfinder: Schmidt, Sophia, 60439 Frankfurt am Main (DE); Linicus, Matthias, 60439 Frankfurt am Main (DE)
(74) Vertreter: Air Liquide

(56) Entgegenhaltungen:
- WO-A1-2012/121727
- DE-A1- 19 945 326
- US-A1- 2005 172 807

## Beschreibung

### Gebiet der Erfindung

Die Erfindung betrifft ein Verfahren zur Entfernung von Kohlendioxid (CO₂) und Wasser (H₂O) aus Synthesegas, wobei das Synthesegas zumindest Wasserstoff (H₂), Kohlendioxid (CO₂) und Wasser (H₂O) aufweist. Die Erfindung betrifft ferner eine Anlage zur Entfernung von Kohlendioxid (CO₂) und Wasser (H₂O) aus Synthesegas, wobei das Synthesegas zumindest Wasserstoff (H₂), Kohlendioxid (CO₂) und Wasser (H₂O) aufweist.

### Stand der Technik

Die nachveröffentlichten europäischen Patentanmeldungen EP 20 020 521 und EP 20 020 522 beschreiben ein Verfahren zur Herstellung von Wasserstoff oder Synthesegas (Gemisch aus Wasserstoff und Kohlenmonoxid) durch Bereitstellen eines Rohsynthesegases und Abtrennung des im Rohsynthesegas anfallenden Kohlendioxids durch Absorption bei erhöhtem Druck in einem physikalisch wirkenden Absorptionsmittel, beispielsweise Methanol. Das mit Kohlendioxid beladene Absorptionsmittel wird in einer Regenerationsvorrichtung behandelt, um das Kohlendioxid aus dem Absorptionsmittel anschließend möglichst quantitativ zu desorbieren und einer darauf folgenden Lagerung unter Druck oder einer weiteren Verwendung zuzuführen.

Die Besonderheit des Verfahrens liegt unter anderem darin begründet, dass keine Heißregeneration des beladenen Absorptionsmittels erforderlich ist, das Kohlendioxid somit ausschließlich durch Druckabsenkung (Flashen) aus dem beladenen Absorptionsmittel desorbiert werden kann.

Das zur Herstellung von Wasserstoff oder Synthesegas im oben genannten Gaswäscheverfahren zu behandelnde Rohsynthesegas weist neben Kohlendioxid als zu entfernender Gaskomponente auch Wasser auf, welches zur Gewinnung von reinem Wasserstoff oder reinem Synthesegas möglichst quantitativ aus dem Rohsynthesegas zu entfernen ist.

Das im zu behandelnden Rohsynthesegas enthaltene Wasser kann sich ferner nach Eintritt in die Absorptionskolonne im Hauptabsorptionsmittelkreislauf zur Kohlendioxid-Entfernung anreichern, da es nicht vollständig vor Eintritt in die Absorptionskolonne entfernt wird. Bei der Auslegung einer entsprechenden Gaswäscheanlage wird in der Regel eine niedrige Wasserkonzentration im Absorptionsmittel angenommen, beispielsweise von weniger als einem Massenprozent. Jede Anreicherung von Wasser im Absorptionsmittel, welche über die bei der Auslegung berücksichtigte Konzentration hinausgeht, führt zu einer Verschlechterung des Absorptionswirkungsgrads und der Selektivität des Absorptionsmittels, was letztlich die Qualität des in der Gaswäscheanlage gereinigten Zielprodukts (Wasserstoff oder Synthesegas) mindert. Insbesondere steigt dadurch der Kohlendioxid-Gehalt im Produkt und die entsprechende Kohlendioxid-Abscheiderate sinkt.

Wasser kann von Methanol oder anderen polaren physikalisch wirkenden Absorptionsmitteln nur durch Destillation/Rektifikation abgetrennt werden. Im Falle von Methanol muss das gesamte Absorptionsmittel als niedrig siedende Komponente verdampft werden und verlässt die Rektifikationskolonne am Kopfende, während die reine Wasserfraktion am Boden der Kolonne verbleibt. Gemäß EP 20 020 521 und EP 20 020 522 wird aus dem Hauptabsorptionsmittelkreislauf ein Teilstrom Absorptionsmittel entnommen und der Rektifikationskolonne zugeführt. Die Wasserkonzentration im Hauptabsorptionsmittelkreislauf ist dabei relativ niedrig. Beispielsweise beträgt diese circa ein Massenprozent. Daher muss der Massenstrom des der Rektifikationskolonne zugeführten Teilstroms vergleichsweise hoch sein, um die vollständige Entfernung des gesamten überschüssigen Wassers aus dem Absorptionsmittelkreislauf über die Rektifikationskolonne sicherzustellen. Dies führt zu einem hohen Energiebedarf und damit Betriebskosten (OPEX) für die Verdampfung und Rückführung des gesamten Methanols über den Kolonnenkopf zurück in den Hauptabsorptionsmittelkreislauf und dementsprechend zu hohen Installationskosten (CAPEX) für eine entsprechend dimensionierte Rektifikationskolonne.

DE 199 45 326 A1 offenbart ein Verfahren zur Entfernung von Kohlendioxid, Schwefelverbindungen, Wasser und aromatischen und höheren aliphatischen Kohlenwasserstoffen aus technischen Gasen. Das zu reinigende Gas wird durch Absorption bei erhöhtem Betriebsdruck von Sauergaskomponenten, Wasser und Kohlenwasserstoffen befreit. Als Absorbens wird zumindest ein Morpholinderivat eingesetzt. Mit absorbierten Komponenten beladenes Absorbens wird mit Hilfe eines Strippgases regeneriert. Das Strippgas wird durch Teilverdampfung des beladenen Absorbens erzeugt.

WO 2012/121727 A1 offenbart ein Verfahren zur Abtrennung saurer Gase aus Synthesegas unter Verwendung eines Absorptionsmittels zur Bildung eines behandelten Synthesegasstroms und eines kohlendioxidreichen Lösungsmittelstroms. Kohlendioxid und Restgas werden aus dem kohlendioxidreichen Lösungsmittelstrom abgezogen, um einen kohlendioxidreichen Flash-Strom zu bilden. Der kohlendioxidreiche Flash-Strom wird auf einen vorgegebenen hohen Druck verdichtet. Der kohlendioxidreiche Entspannungsstrom wird abgekühlt und auf eine vorbestimmte niedrige Temperatur und einen vorbestimmten Druck entspannt, um einen gekühlten entspannten kohlendioxidreichen Entspannungsstrom zu bilden. Der gekühlte expandierte kohlendioxidreiche Flash-Strom wird fraktioniert, um einen kohlendioxidreichen Produktstrom und einen Restgasstrom zu bilden.

US 2005/172807 offenbart eine Anlage mit einem Vakuumstripper, der ein schwefelwasserstoffhaltiges physikalisches Lösungsmittel aufnimmt und in dem schwefelwasserstofffreies Strippgas durch einen Hochdruck-Flashbehälter und einen Mitteldruck-Flashbehälter bereitgestellt wird.

### Beschreibung der Erfindung

Allgemein ist es eine Aufgabe der vorliegenden Erfindung, die vorgenannten Nachteile des Standes der Technik zu überwinden.

Insbesondere besteht eine Aufgabe der vorliegenden Erfindung darin, den Energiebedarf bezüglich des Betriebs der Rektifikationskolonne zur Entfernung von im Absorptionsmittel angereichertem Wasser zu senken.

Insbesondere besteht eine Aufgabe der vorliegenden Erfindung darin, den apparativen Aufwand bezüglich der Installation der Rektifikationskolonne zur Entfernung von im Absorptionsmittel angereichertem Wasser zu verkleinern.

Eine weitere Aufgabe der vorliegenden Erfindung liegt darin, die sich im Hauptabsorptionsmittelkreislauf anreichernde Wassermenge zu minimieren, das heißt die Konzentration von Wasser im Hauptabsorptionsmittelkreislauf möglichst klein zu halten.

Eine weitere Aufgabe der vorliegenden Erfindung besteht darin, die Reinheit des Zielprodukts, insbesondere Wasserstoff oder Synthesegas, in Bezug auf Verunreinigungen, insbesondere Kohlendioxid, bei möglichst geringem Energiebedarf und apparativem Aufwand des betreffenden Gaswäscheverfahrens zu verbessern.

Eine weitere Aufgabe der vorliegenden Erfindung besteht darin, die Abscheiderate an Kohlendioxid im Verfahren bei möglichst geringem Energiebedarf und apparativem Aufwand des betreffenden Gaswäscheverfahrens zu optimieren.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Entfernung von Kohlendioxid (CO₂) und Wasser (H₂O) aus Synthesegas, wobei das Synthesegas zumindest Wasserstoff (H₂), Kohlendioxid (CO₂) und Wasser (H₂O) aufweist, umfassend die Schritte
(a) Bereitstellen eines physikalisch wirkenden Absorptionsmittels, insbesondere Methanol;
(b) Zuführen des Synthesegases zu einer Waschvorrichtung, insbesondere zu einer Waschkolonne, und Entfernen von im Synthesegas enthaltenem Wasser in der Waschvorrichtung durch Waschen des Synthesegases mit der Waschvorrichtung zugeführtem Absorptionsmittel, wodurch ein zumindest teilweise von Wasser befreites Synthesegas sowie ein Gemisch aus Absorptionsmittel und Wasser erhalten werden, und wobei das zumindest teilweise von Wasser befreite Synthesegas sowie das Gemisch aus Absorptionsmittel und Wasser aus der Waschvorrichtung abgezogen werden;
(c) Zuführen des Gemischs aus Absorptionsmittel und Wasser zu einer thermischen Trennvorrichtung, und thermisches Trennen des Gemischs in der Trennvorrichtung in Wasser und Absorptionsmittel, wobei das Wasser aus der thermischen Trennvorrichtung abgezogen wird, und wobei das Absorptionsmittel aus der thermischen Trennvorrichtung abgezogen und anschließend der Waschvorrichtung zum Entfernen des im Synthesegas enthaltenen Wasser gemäß Schritt (b) zugeführt wird;
(d) Zuführen des zumindest teilweise von Wasser befreiten Synthesegases zu einer Absorptionsvorrichtung, und Entfernen von Kohlendioxid aus dem Synthesegas durch physikalische Absorption des Kohlendioxids im Absorptionsmittel bei Absorptionsdruck in der Absorptionsvorrichtung, wobei das Absorptionsmittel und das Synthesegas in der Absorptionsvorrichtung im Gegenstrom geführt werden, wobei ein mit zumindest Kohlendioxid beladenes Absorptionsmittel und ein zumindest teilweise von Kohlendioxid und Wasser befreites Synthesegas erhalten werden, und wobei das mit zumindest Kohlendioxid beladene Absorptionsmittel und das zumindest teilweise von Kohlendioxid und Wasser befreite Synthesegas aus der Absorptionsvorrichtung abgezogen werden;
(e) Entfernen von Kohlendioxid aus dem aus der Absorptionsvorrichtung abgezogenen beladenen Absorptionsmittel durch Desorption des Kohlendioxids in einer Regenerationsvorrichtung durch Druckabsenkung gegenüber dem Absorptionsdruck, wobei desorbiertes Kohlendioxid und zumindest teilweise regeneriertes Absorptionsmittel aus der Regenerationsvorrichtung abgezogen werden, und wobei das zumindest teilweise regenerierte Absorptionsmittel zur Verwendung als Absorptionsmittel gemäß Schritt (d) zur Absorptionsvorrichtung zurückgeführt wird.

Optional enthält das Synthesegas auch Kohlenmonoxid (CO).

Gemäß Schritt (d) wird ein zumindest teilweise von Kohlendioxid und Wasser befreites Synthesegas aus der Absorptionsvorrichtung abgezogen. Dabei kann es sich bei diesem abgezogenen "Synthesegas" im Sinne der Erfindung auch um eine Gasgemisch handeln, welches Wasserstoff als Hauptkomponente aufweist, und lediglich geringe Mengen oder kein Kohlenmonoxid aufweist.

Erfindungsgemäß wird ein dedizierter Kreislauf zur Wasserentfernung eingerichtet, der den Übergang von Wasser in den Hauptabsorptionsmittelkreislauf zur Kohlendioxidentfernung im Wesentlichen verhindert. Ein Bestandteil dieses dedizierten Kreislaufs ist eine Waschvorrichtung (siehe Schritt (b)), welcher das zu reinigende Synthesegas und Absorptionsmittel zugeführt werden. In der Waschvorrichtung wird das zu reinigende Synthesegas zumindest teilweise von Wasser befreit. "Von Wasser befreit" bedeutet in diesem Zusammenhang insbesondere, dass das Wasser durch das Absorptionsmittel physikalisch gelöst wird. Bei dem Absorptionsmittel handelt es sich daher vorzugsweise um ein hygroskopisches Absorptionsmittel, insbesondere Methanol. Vorzugsweise werden das zu reinigende Synthesegas, also Rohsynthesegas, und das Absorptionsmittel dabei im Gegenstrom geführt. Eine Ausführungsform des erfindungsgemäßen Verfahrens ist daher dadurch gekennzeichnet, dass das Synthesegas und das Absorptionsmittel in der Waschvorrichtung im Gegenstrom geführt werden.

Die Waschvorrichtung ist beispielsweise als Waschkolonne ausgeführt und kann zusätzlich mit Glockenböden, Ventilböden, strukturierten Packungen oder ähnlichen Einbauten zur Verbesserung des Stoffaustauschs zwischen Absorptionsmittel und Rohsynthesegas versehen sein. Insbesondere bei Verwendung eines hygroskopischen Absorptionsmittels, insbesondere Methanol, ist nur eine geringe Menge an Absorptionsmittel erforderlich, um das Wasser aus dem zu reinigenden Synthesegas quantitativ oder nahezu quantitativ zu entfernen.

Das in der Waschvorrichtung erhaltene Gemisch an Absorptionsmittel und Wasser wird gemäß Schritt (c) einer thermischen Trennvorrichtung zugeführt und dort thermisch in Absorptionsmittel und Wasser getrennt. Bei der thermischen Trennvorrichtung handelt es sich insbesondere um eine Destillationsvorrichtung, insbesondere ein Rektifikationsvorrichtung. Insbesondere wird das Absorptionsmittel, insbesondere Methanol, über den Kopfbereich der thermischen Trennvorrichtung abgezogen und das Wasser über den Sumpfbereich der thermischen Trennvorrichtung abgezogen.

Das aus der thermischen Trennvorrichtung abgezogene Absorptionsmittel wird gemäß Schritt (c) aus der thermischen Trennvorrichtung abgezogen und anschließend der Waschvorrichtung zum Entfernen des im Synthesegas enthaltenen Wassers gemäß Schritt (b) zugeführt. Dabei wird zumindest eine Teilmenge des aus der thermischen Trennvorrichtung abgezogenen Absorptionsmittels der Waschvorrichtung zugeführt. Dadurch wird ein dedizierter Kreislauf für die Entfernung von Wassers durch das Absorptionsmittel definiert, wodurch nahezu kein Wasser aus dem zu behandelnden Synthesegas in den Hauptabsorptionsmittelkreislauf übergehen kann. Der "Hauptabsorptionsmittelkreislauf" ist dabei als der Absorptionsmittelkreislauf zu verstehen, welcher unter Einbeziehung der Absorptionsvorrichtung gemäß Schritt (d) und der Regenerationsvorrichtung gemäß Schritt (e) gebildet wird. Die Hauptmenge des für die Absorption von Kohlendioxid erforderlichen Absorptionsmittels zirkuliert zwischen diesen und über diese beiden Anlagenkomponenten der betreffenden Gaswäscheanlage.

Gemäß einer Ausführungsform wird zumindest ein Teil des aus der thermischen Trennvorrichtung abgezogenen Absorptionsmittels anschließend der Waschvorrichtung zum Entfernen des im Synthesegas enthaltenen Wasser gemäß Schritt (b) zugeführt.

Durch das erfindungsgemäße Verfahren muss in der thermischen Trennvorrichtung letztlich ein deutlich geringere Menge an Absorptionsmittel verdampf werden als in einer Konfiguration ohne den erfindungsgemäßen dedizierten Kreislauf. Dadurch wird der Energieaufwand und der apparative Aufwand bezüglich der thermischen Trennvorrichtung signifikant verringert.

Gemäß einer nicht erfindungsgemäßen Konfiguration muss, wie oben erläutert, ein größerer Teil Absorptionsmittel aus dem Hauptabsorptionsmittelkreislauf entnommen und in der thermischen Trennvorrichtung behandelt werden, um im Absorptionsmittel des Hauptabsorptionsmittelkreislauf angereichertes Wasser zu entfernen. Erfindungsgemäß ist eine solche Anreicherung von Wasser im Hauptabsorptionsmittelkreislauf von vorneherein ausgeschlossen.

Bei dem physikalisch wirkenden Absorptionsmittel handelt es sich vorzugsweise um Methanol. Gemäß Schritt (a) wird daher vorzugsweise Methanol als physikalisch wirkendes Absorptionsmittel bereitgestellt. Vorzugsweise wird das Kohlendioxid in der Absorptionsvorrichtung gemäß Schritt (d) bei niedrigen Temperaturen, insbesondere tiefkalten Temperaturen, in Methanol absorbiert. Vorzugsweise weist das Methanol vor Eintritt in die Absorptionsvorrichtung eine Temperatur von weniger als -10 °C auf, oder von weniger als -20 °C auf, oder von weniger als -30 °C auf, oder von weniger als -40 °C auf. Vorzugsweise weist das Methanol vor Eintritt in die Absorptionsvorrichtung eine Temperatur von mehr als -60 °C auf, oder von mehr als -50 °C auf.

Die Absorptionsvorrichtung ist beispielsweise als Absorptionskolonne ausgestaltet und wird bei Absorptionsdruck betrieben. Bei Absorptionsdruck handelt es sich um erhöhten Druck, insbesondere einen Druck deutlich oberhalb des Umgebungsdrucks, insbesondere einen Druck von mehr als 20 bar, oder mehr als 30 bar, beispielsweise von 20 bis 80 bar, vorzugsweise 30 bis 70 bar, weiter bevorzugt 35 bis 55 bar, weiter bevorzugt 35 bis 45 bar.

Gemäß Schritt (e) wird Kohlendioxid in einer Regenerationsvorrichtung durch Druckabsenkung gegenüber dem Absorptionsdruck desorbiert und dadurch wieder aus dem zumindest mit Kohlendioxid beladenen Absorptionsmittel freigesetzt. Vorzugsweise handelt es sich bei der Regenrationsvorrichtung um eine Mehrzahl in Serie geschalteter Flash-Stufen. Die Flash-Stufen sind in Serie geschaltet und beispielsweise als Flash-Kolonnen oder Flash-Behälter ausgestaltet. In Serie geschaltet bedeutet insbesondere, dass die Mehrzahl an Flash-Stufen hintereinander geschaltet sind und untereinander in Fluidverbindung stehen, insbesondere zwei unmittelbar hintereinander geschaltete Flash-Stufen in Fluidverbindung stehen. Der Druck in einer Flash-Stufe ist niedriger als der Absorptionsdruck und wird vorzugsweise von Flash-Stufe zu Flash-Stufe in Flussrichtung des Absorptionsmittels vermindert. Der Druck in einer nachgeschalteten Flash-Stufe ist also grundsätzlich niedriger als der Druck in der dieser Flash-Stufe vorgeschalteten Flash-Stufe.

Vorzugsweise wird die letzte der in Serie geschalteten Flash-Stufen mit Unterdruck (Vakuum) betrieben. Gemäß einem Beispiel herrscht in der letzten der in Serie geschalteten Flash-Stufen ein Druck von 0,1 bis 0,9 bar, vorzugsweise von 0,1 bis 0,5 bar, weiter bevorzugt von 0,2 bar. Mit "Unterdruck" ist dabei ein Druck gemeint, welcher niedriger ist als der Umgebungsdruck. Durch die Verwendung von Unterdruck in der letzten Flash-Stufe wird die Ausbeute an desorbiertem Kohlendioxid maximiert und die Kapazität des zumindest teilregenerierten Absorptionsmittels für die erneute Absorption von Kohlendioxid in der Absorptionsvorrichtung maximiert.

Das der Waschvorrichtung gemäß Schritt (b) und nachfolgend der Absorptionsvorrichtung gemäß Schritt (d) zugeführte Synthesegas ist das zu reinigende Synthesegas oder Rohsynthesegas. Dieses wird durch dem Fachmann bekannte Verfahren erzeugt. Beispiele sind Dampfreformierung (SMR), autotherme Reformierung (ATR), gasbeheizte Reformierung (GHR) und Kombinationen aus den vorgenannten. Diese Verfahren erzeugen eine Synthesegas, welches zumindest die Bestandteile Wasserstoff (H₂), Kohlenmonoxid (CO), sowie Kohlendioxid (CO₂) und Wasser (H₂O) als unerwünschte Bestandteile aufweist. Vorzugweise handelt es sich bei dem Verfahren zur Synthesegaserzeugung um autotherme Reformierung. Autotherme Reformierung wird in der Regel für die Herstellung von Synthesegas gewählt, wenn besonders hohe Gaskapazitäten gefordert sind. In solchen Fällen ist die Entfernung des Kohlendioxids durch physikalische Absorption wirtschaftlich oft sinnvoller als ein Verfahren zur chemischen Absorption des Kohlendioxids, beispielsweise eine Aminwäsche.

Vorzugsweise wird das primär erzeugte Synthesegas in einem Folgeschritt einer Wassergas-Shift-Reaktion unterzogen, um die Ausbeute an Wasserstoff zu erhöhen. Durch die Umsetzung des Kohlenmonoxid zu Kohlendioxid im Zuge der Wassergas-Shift-Reaktion enthält das der Absorptionsvorrichtung zugeführte Synthesegas Wasserstoff und Kohlendioxid als Hauptkomponenten. Durch die Abtrennung des Kohlendioxid und Wassers aus dem Synthesegas im Zuge des erfindungsgemäßen Verfahrens wird in diesem Fall gemäß Schritt (d) vorzugsweise ein von Kohlendioxid und Wasser befreites "Synthesegas" aus der Absorptionsvorrichtung abgezogen, welches Wasserstoff als Hauptbestandteil aufweist. Ein solches Rohwasserstoffprodukt kann zur weiteren Aufarbeitung zur Gewinnung von reinem Wasserstoff beispielsweise einem Druckwechsel-Adsorptionsverfahren (PSA) zugeführt werden.

Eine Ausführungsform des erfindungsgemäßen Verfahrens ist dadurch gekennzeichnet, dass eine Teilmenge des aus der Regenerationsvorrichtung abgezogenen, zumindest teilweise regenerierten Absorptionsmittels der Waschkolonne zum Entfernen von im Synthesegas enthaltenem Wasser zugeführt wird.

Zusätzlich zu dem aus der thermischen Trennvorrichtung abgezogenen Absorptionsmittel wird gemäß dieser Ausführungsform auch eine Teilmenge des aus der Regenerationsvorrichtung abgezogenen Absorptionsmittels der Waschvorrichtung zur Entfernung von Wasser in dieser zugeführt. Das aus der thermischen Trennvorrichtung gemäß Schritt (c) abgezogene Wasser kann mit Absorptionsmittel verunreinigt sein, was zu Absorptionsmittelverlusten im dedizierten Kreislauf zur Wasserentfernung führen kann. Das Zuführen regenerierten Absorptionsmittels gleicht diese Verluste in vorteilhafter Weise aus. Ferner kann eine gewisse Menge an Absorptionsmittel durch die Strömung in der Waschvorrichtung in die Absorptionsvorrichtung gelangen, indem das Absorptionsmittel mit dem Synthesegas mitgerissen wird. Das Zuführen von Absorptionsmittel zum dedizierten Kreislauf zur Wasserentfernung gleicht auch diesen Verlust in Bezug auf die Massenbilanz im Kreislauf aus.

Eine Ausführungsform des erfindungsgemäßen Verfahrens ist dadurch gekennzeichnet, dass das Synthesegas vor dem Zuführen zur Waschvorrichtung unter den Taupunkt von Wasser gekühlt wird, und dadurch aus dem Synthesegas auskondensiertes Wasser in einer Abscheidevorrichtung abgetrennt wird und der thermischen Trennvorrichtung zugeführt wird.

Dadurch wird die der Waschvorrichtung über das zu reinigende Synthesegas zugeführte Wassermenge in einem vorgeschalteten Schritt bereits deutlich reduziert. Entsprechend wird weniger Absorptionsmittel für das Entfernen des Wassers in der Waschvorrichtung benötigt. Entsprechend sinkt der Aufwand für die Abtrennung von Absorptionsmittel von Wasser in der thermischen Trennvorrichtung weiter.

Insbesondere umfasst die vorgenannte Ausführungsform einen Kühlschritt zur Kondensation von Wasser aus dem zu reinigenden Synthesegas, vorzugsweise in einem Wärmeaustauscher, und einen Abtrennschritt zur Abtrennung des kondensierten Wassers vom gasförmigen Synthesegas, insbesondere in einer Abscheidevorrichtung, wie beispielsweise einem Abscheider.

Entsprechend wird das Synthesegas aus der Abscheidevorrichtung abgezogen und das aus der Abscheidevorrichtung abgezogene Synthesegas der Waschvorrichtung zum weiteren Entfernen von im Synthesegas enthaltenen Wasser zugeführt, insbesondere zum weiteren Entfernen von im Synthesegas enthaltenen Wasser gemäß Schritt (b) zugeführt.

Eine Ausführungsform des erfindungsgemäßen Verfahrens ist dadurch gekennzeichnet, dass aus der thermischen Trennvorrichtung abgezogenes Absorptionsmittel gasförmig ist und unter den Taupunkt des Absorptionsmittels gekühlt wird, bevor es der Waschvorrichtung zugeführt wird.

Eine Ausführungsform des erfindungsgemäßen Verfahrens ist dadurch gekennzeichnet, dass ein Teilstrom des aus der thermischen Trennvorrichtung abgezogenen Absorptionsmittels in gasförmiger Form als Strippmedium zum Entfernen von Kohlendioxid aus dem beladenen Absorptionsmittel in der Regenerationsvorrichtung genutzt wird.

Ein Teil des aus der thermischen Trennvorrichtung abgezogenen Absorptionsmittels kann, anstatt dieses zu kondensieren und der Waschvorrichtung zuzuführen, auch als Strippmedium oder Stripphilfsmittel zum Austreiben von Kohlendioxid in der Regenerationsvorrichtung verwendet werden. Dadurch kann die Menge an abgeschiedenem Kohlendioxid, also die Effizienz der Desorption in der Regenerationsvorrichtung, ohne zusätzlichen Energiebedarf weiter gesteigert werden. Ferner besteht der Vorteil, dass die aus der thermischen Trennvorrichtung abgezogenen Absorptionsmitteldämpfe chemisch dem Absorptionsmittel entsprechen. Dadurch wird in das Absorptionsmittel kein "fremdes" Stripp-Medium eingebracht, welches anschließend aufwändig aus dem ausgestrippten Kohlendioxid zu entfernen wäre, beispielsweise Stickstoff. Mitgerissene Absorptionsmitteldämpfe können durch Kondensation und Abscheidung leicht von Kohlendioxid getrennt werden. Wird hingegen Stickstoff als sonst übliches Stripphilfsmittel verwendet, so kann dieser anschließend nur schwierig von Kohlendioxid getrennt werden. Dies würde die Möglichkeit der Verwendung von Kohlendioxid als Produkt stark einschränken oder würde dessen Lagerung erschweren.

Eine Ausführungsform des erfindungsgemäßen Verfahrens ist dadurch gekennzeichnet, dass das Verfahren keinen Heißregenerationsschritt zum Regenerieren des beladenen Absorptionsmittels umfasst.

Vorzugsweise, mit Ausnahme der vorgenannten Ausführungsform, zeichnet sich das erfindungsgemäße Verfahren dadurch aus, dass ausschließlich Druckabsenkung (Flashen) gegenüber dem Absorptionsdruck zur Desorption des Kohlendioxid in der Regenerationsvorrichtung gemäß Schritt (e) verwendet wird. Insbesondere benötigt das erfindungsgemäße Verfahren keinen bei Gaswäschen zur vollständigen Regenerierung des Absorptionsmittels üblichen Heißregenerationsschritt als letzten Regenerationsschritt, bei welchem das Absorptionsmittel beispielsweise mittels eines Aufkochers vollständig zum Sieden erhitzt wird. In einem solchen Heißregenerationsschritt wirken die Absorptionsmitteldämpfe als Stripphilfsmittel.

Eine Ausführungsform des erfindungsgemäßen Verfahrens ist dadurch gekennzeichnet, dass eine Teilmenge des aus der Regenerationsvorrichtung abgezogenen, zumindest teilweise regenerierten Absorptionsmittels der thermischen Trennvorrichtung zugeführt wird, wobei Wasserrückstände aus dem Absorptionsmittel durch Waschen mit dem zumindest teilweise regenerierten Absorptionsmittel in der thermischen Trennvorrichtung entfernt werden, bevor das Absorptionsmittel aus der thermischen Trennvorrichtung gemäß Schritt (c) abgezogen wird. Vorzugsweise wird das zumindest teilweise regenerierten Absorptionsmittels der thermischen Trennvorrichtung dieser in ihrem Kopfbereich zugeführt.

Wie groß die Teilmenge des der thermischen Trennvorrichtung zugeführten, zumindest teilweise regenerierten Absorptionsmittels ist, hängt von der im Synthesegas enthaltenen Wassermenge ab.

Das in der thermischen Trennvorrichtung durch thermische Trennung erzeugte gasförmige Absorptionsmittel enthält noch Rückstände von Wasser, welche durch das entsprechende thermische Trennverfahren, zum Beispiel Rektifikation, nicht restlos entfernt werden können. Um das Mitschleppen von Wasser in die Waschvorrichtung zu vermeiden, werden diese Rückstände durch Zurückwaschen in der thermischen Trennvorrichtung mit dem zumindest teilweise regenerierten Absorptionsmittel in vorteilhafter Weise entfernt. Durch die Zugabe von regeneriertem Absorptionsmittel am Kopfbereich der thermischen Trennvorrichtung kann diese ferner leichter betrieben werden. Ein weiterer Vorteil ergibt sich aus dieser Ausführungsform in Zusammenhang mit der oben erwähnten Ausführungsform, in welcher aus der thermischen Trennvorrichtung abgezogenes, gasförmiges Absorptionsmittel als Strippmedium in der Regenerationsvorrichtung genutzt wird. So wird vermieden, dass Wasser in den Hauptabsorptionsmittelkreislauf, in diesem Fall über die Regenerationsvorrichtung, eingeschleppt wird.

Vorteile und Effekte, welche für vorgenannte Verfahrensmerkmale der Erfindung beschrieben sind, gelten zumindest für technisch gleichwirkende Vorrichtungsmerkmale ebenso für die folgenden Anlagenmerkmale.

Die Aufgaben der Erfindung werden ferner zumindest teilweise gelöst durch eine Anlage zur Entfernung von Kohlendioxid (CO₂) und Wasser (H₂O) aus Synthesegas, wobei das Synthesegas zumindest Wasserstoff (H₂), Kohlendioxid (CO₂) und Wasser (H₂O) aufweist, umfassend folgende miteinander in Wirkverbindung stehende Anlagenkomponenten:
(a) Mittel zum Bereitstellen eines physikalisch wirkenden Absorptionsmittels, insbesondere Methanol;
(b) Eine Waschvorrichtung, insbesondere eine Waschkolonne, und Mittel zum Zuführen des Synthesegases und zum Zuführen von Absorptionsmittel zur Waschvorrichtung, wobei die Waschvorrichtung zum Entfernen von im Synthesegas enthaltenen Wasser durch Waschen des Synthesegases mit Absorptionsmittel konfiguriert ist, wodurch ein zumindest teilweise von Wasser befreites Synthesegas sowie ein Gemisch aus Absorptionsmittel und Wasser in der Waschvorrichtung erhältlich sind, und Mittel zum Abziehen des zumindest teilweise von Wasser befreiten Synthesegases und des Gemischs aus Absorptionsmittel und Wasser aus der Waschvorrichtung;
(c) Eine thermische Trennvorrichtung, und Mittel zum Zuführen des Gemischs aus Absorptionsmittel und Wasser zur thermischen Trennvorrichtung, wobei das Gemisch aus Absorptionsmittel und Wasser in der Trennvorrichtung in Wasser und Absorptionsmittel trennbar ist, und Mittel zum Abziehen des Wassers aus der thermischen Trennvorrichtung, und Mittel zum Abziehen des Absorptionsmittels aus der thermischen Trennvorrichtung und zum Zuführen des Absorptionsmittels zur Waschvorrichtung gemäß (b) zum Entfernen des im Synthesegas enthaltenen Wassers in der Waschvorrichtung;
(d) Eine Absorptionsvorrichtung, und Mittel zum Zuführen des zumindest teilweise von Wasser befreiten Synthesegases zur Absorptionsvorrichtung, wobei die Absorptionsvorrichtung so konfiguriert ist, dass Kohlendioxid aus dem Synthesegas durch physikalische Absorption des Kohlendioxids im Absorptionsmittel bei Absorptionsdruck entfernbar ist, und wobei das Absorptionsmittel und das Synthesegas in der Absorptionsvorrichtung im Gegenstrom führbar sind, wobei ein mit zumindest Kohlendioxid beladenes Absorptionsmittel und ein zumindest teilweise von Kohlendioxid und Wasser befreites Synthesegas erhältlich sind, und Mittel zum Abziehen des mit zumindest Kohlendioxid beladenen Absorptionsmittel und des zumindest teilweise von Kohlendioxid und Wasser befreiten Synthesegases aus der Absorptionsvorrichtung;
(e) Eine Regenerationsvorrichtung, wobei die Regenerationsvorrichtung zum Entfernen von Kohlendioxid aus dem aus der Absorptionsvorrichtung abziehbaren beladenen Absorptionsmittel durch Desorption des Kohlendioxids durch Druckabsenkung gegenüber dem Absorptionsdruck konfiguriert ist, wodurch ein zumindest teilweise regeneriertes Absorptionsmittel erhältlich ist, Mittel zum Abziehen des desorbierten Kohlendioxids und des zumindest teilweise regenerierten Absorptionsmittels aus der Regenerationsvorrichtung, und Mittel zum Zurückführen des zumindest teilweise regenerierten Absorptionsmittels zur Absorptionsvorrichtung gemäß (d) zur Verwendung als Absorptionsmittel.

Eine Ausführungsform der erfindungsgemäßen Anlage ist dadurch gekennzeichnet, dass die Anlage Mittel zum Zuführen einer Teilmenge des aus der Regenerationsvorrichtung abziehbaren, zumindest teilweise regenerierten Absorptionsmittels zur Waschkolonne zum Entfernen von im Synthesegas enthaltenen Wasser umfasst.

Eine Ausführungsform der erfindungsgemäßen Anlage ist dadurch gekennzeichnet, dass stromaufwärts zur Waschvorrichtung in Flussrichtung des Synthesegases nacheinander ein Wärmeaustauscher und eine Abscheidevorrichtung, insbesondere ein Flüssigkeitsabscheider, angeordnet sind, wobei der Wärmeaustauscher zum Kühlen des Synthesegases unter den Taupunkt von Wasser konfiguriert ist, und die Abscheidevorrichtung zum Abscheiden des auskondensierten Wassers aus dem Synthesegas konfiguriert ist, und wobei die Anlage Mittel zum Zuführen des in der Abscheidevorrichtung auskondensierten Wassers zur thermischen Trennvorrichtung umfasst.

Eine Ausführungsform der erfindungsgemäßen Anlage ist dadurch gekennzeichnet, dass die Anlage Mittel zum Abziehen von Synthesegas aus der Abscheidevorrichtung umfasst, und Mittel zum Zuführen des aus der Abscheidevorrichtung abziehbaren Synthesegases zur Waschvorrichtung zum weiteren Entfernen von im Synthesegas enthaltenen Wasser umfasst.

Eine Ausführungsform der erfindungsgemäßen Anlage ist dadurch gekennzeichnet, dass die Anlage Mittel zum Kühlen von aus der thermischen Trennvorrichtung abziehbarem gasförmigem Absorptionsmittel umfasst, wobei die Mittel so konfiguriert sind, dass das Absorptionsmittel unter den Taupunkt des Absorptionsmittels kühlbar ist.

Eine Ausführungsform der erfindungsgemäßen Anlage ist dadurch gekennzeichnet, dass die Anlage Mittel zum Abziehen von gasförmigem Absorptionsmittel aus der thermischen Trennvorrichtung umfasst, und Mittel zum Zuführen des gasförmigen Absorptionsmittels zur Regenerationsvorrichtung als Strippmedium umfasst, zum Entfernen von Kohlendioxid aus dem beladenen Absorptionsmittel in der Regenerationsvorrichtung durch Strippen.

Eine Ausführungsform der erfindungsgemäßen Anlage ist dadurch gekennzeichnet, dass die Anlage keine Mittel zum Heißregenerieren des beladenen Absorptionsmittels umfasst.

Eine Ausführungsform der erfindungsgemäßen Anlage ist dadurch gekennzeichnet, dass die Anlage Mittel zum Abziehen einer Teilmenge des aus der Regenerationsvorrichtung abziehbaren, zumindest teilweise regenerierten Absorptionsmittels umfasst, und Mittel zum Zuführen des zumindest teilweise regenerierten Absorptionsmittels zur thermischen Trennvorrichtung umfasst, wodurch Wasserrückstände aus dem Absorptionsmittel durch Waschen mit dem zumindest teilweise regenerierten Absorptionsmittel in der thermischen Trennvorrichtung entfernbar sind, und wobei die Anlage Mittel zum Abziehen des von Wasserrückständen befreiten Absorptionsmittels aus der thermischen Trennvorrichtung umfasst.

### Ausführungsbeispiele

In den folgenden Ausführungsbeispielen wird die Erfindung unter Hinzuziehung der Zeichnungen näher erläutert. Die Ausführungsbeispiele stellen beispielhafte Ausgestaltungen der Erfindung dar, ohne diese in ihrem Umfang zu beschränken.

Es zeigt
- Figur 1: ein stark vereinfachtes Blockfließbild eines Verfahrens oder einer Anlage für eine beispielhafte Ausgestaltung der Erfindung,
- Figur 2: ein Verfahrensfließbild eines Verfahrens oder einer Anlage für eine beispielhafte Ausgestaltung der Erfindung, und
- Figur 3: ein Verfahrensfließbild eines Verfahrens oder einer Anlage ohne den erfindungsgemäßen dedizierten Kreislauf zur Wasserentfernung.

In den Figuren sind gleiche Elemente mit gleichen Bezugsziffern versehen. Gasströme sind als gestrichelte Linien dargestellt, während Flüssigkeitsströme als durchgezogene Linien dargestellt sind. Pfeilspitzen stellen die Flussrichtung des jeweiligen Stroms dar. Absorptionsmittel ist Methanol.

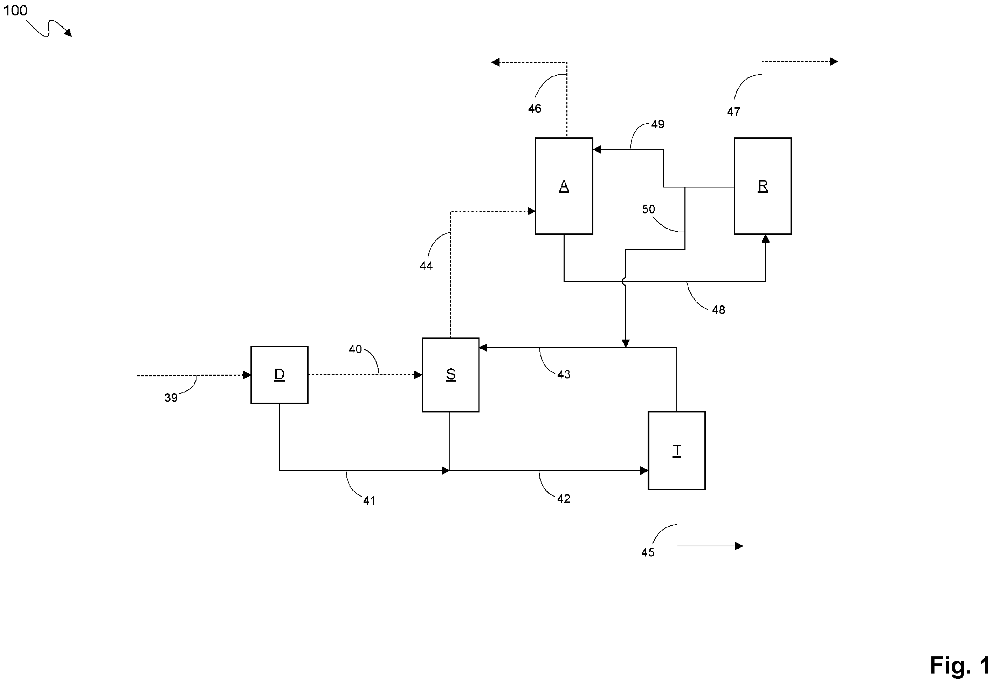

Figur 1 zeigt ein stark vereinfachtes Blockfließbild eines Verfahrens 100 oder einer Anlage für eine beispielhafte Ausgestaltung der Erfindung. Durch die starke Vereinfachung im Blockfließbild eignet sich Figur 1 für die Darstellung der wesentlichen Elemente der Erfindung.

Ein zu reinigendes Synthesegas, beispielsweise ein geshiftetes Synthesegas aus einem autothermen Reformer mit den Hauptbestandteilen Wasserstoff und Kohlendioxid wird über Leitung 39 herangeführt und zunächst in eine Abscheidevorrichtung D eingeschleust. Die Abscheidevorrichtung D umfasst einen Kühler und einen Abscheider zur Kondensation von Wasser aus dem Synthesegas. Das an Wasser verarmte Synthesegas wird über Leitung 40 weitergeführt und in eine Waschvorrichtung S eingeschleust. In der Abscheidevorrichtung D kondensiertes Wasser wird über Leitung 41 aus dieser abgezogen. Die Waschvorrichtung S, welche beispielsweise als Waschkolonne mit Glockenböden ausgestaltet ist, wird über Leitung 43 mit kaltem, flüssigem Methanol gespeist. In der Waschvorrichtung S strömt das zu reinigende, bereits an Wasser verarmte Synthesegas von unten nach oben, während das kalte Methanol von oben nach unten strömt. Im gegenseitigen Stoffaustausch in Waschvorrichtung S wird das im Synthesegas verbliebene Wasser durch das Methanol weitestgehend gelöst. Entsprechend verlässt ein Gemisch aus Methanol und Wasser den Sumpfbereich der Waschvorrichtung S über Leitung 42 und wird mit Wasser aus Leitung 41 zusammengeführt. Das Methanol-Wasser-Gemisch in Leitung 42 wird einer thermischen Trennvorrichtung T zugeführt, welche beispielsweise als Rektifikationskolonne ausgestaltet ist. In der thermischen Trennvorrichtung T werden Methanol und Wasser weitgehend thermisch getrennt. Höher als Methanol siedendes Wasser verlässt den Sumpfbereich der thermischen Trennvorrichtung T über Leitung 45 und wird einer weiteren Aufarbeitung (nicht gezeigt) unterzogen. Niedriger als Wasser siedendes Methanol verlässt in gasförmigem Aggregatzustand die thermische Trennvorrichtung über deren Kopfbereich über Leitung 43. Dieses gasförmige Methanol wird deutlich unter seinen Taupunkt gekühlt (nicht gezeigt) und anschließend in kalter und flüssiger Form wie oben ausgeführt der Waschvorrichtung S zugeführt. Das durch das zu reinigende Synthesegas über Leitung 40 in das Verfahren eingebrachte Wasser zirkuliert dadurch im durch die Leitungen 42 und 43 definierten Kreislauf und kann so nicht in andere Bereiche der Anlage übergehen, sofern die Entfernung des Wassers in der Waschvorrichtung quantitativ erfolgt.

Das von Wasser weitgehend befreite Synthesegas wird über Leitung 44 aus der Waschvorrichtung 44 abgezogen und tritt anschließend mit einem Druck von etwa 40 bar in eine Absorptionsvorrichtung A ein, welche beispielsweise als mehrstufige Absorptionskolonne ausgestaltet ist. In der Absorptionsvorrichtung A werden das zu reinigende Synthesegas und das Absorptionsmittel im Gegenstrom geführt, wobei das Synthesegas von unten nach oben strömt und das Absorptionsmittel von oben nach unten strömt. Entsprechend tritt Absorptionsmittel über Leitung 49 in einen oberen Bereich der Absorptionsvorrichtung ein, und das zu reinigende Synthesegas tritt in einem unteren Bereich über Leitung 44 in die Absorptionsvorrichtung A ein. In der Absorptionsvorrichtung A wird das Synthesegas weitgehend von Kohlendioxid befreit. Entsprechend wird das von Kohlendioxid weitgehend befreite "Synthesegas", welche nunmehr Wasserstoff als Hauptkomponenten umfasst, über Leitung 46 aus der Absorptionsvorrichtung A ausgeschleust. Mit Kohlendioxid beladenes Methanol wird über Leitung 48 aus der Absorptionsvorrichtung abgezogen und tritt anschließend in eine Regenerationsvorrichtung R ein. Die Regenerationsvorrichtung R umfasst beispielsweise eine Vielzahl hintereinander geschalteter Flash-Stufen, beispielsweise drei Flash-Stufen. Die Regenrationsvorrichtung R umfasst vorzugsweise keine Heißregenerationsstufe, in welcher das Absorptionsmittel zum Sieden erhitzt wird. In der Regenerationsvorrichtung R wird Kohlendioxid weitgehend aus dem beladenen Methanol durch Druckabsenkung gegenüber dem Absorptionsdruck desorbiert. Die letzte Flash-Stufe in der Regenerationsvorrichtung R ist dabei vorzugsweise als Vakuum-Flash-Stufe ausgestaltet, um das Kohlendioxid möglichst vollständig aus dem beladenen Methanol auszutreiben. Das ausgetriebene (desorbierte) Kohlendioxid tritt über Leitung 47 aus der Regenerationsvorrichtung R aus und wird anschließend entweder einer weiteren Verwendung oder Lagerung (nicht gezeigt) unterzogen. Je nach Bedarf wird das Kohlendioxid vor der weiteren Verwendung oder Lagerung auf einen dafür erforderlichen Druck komprimiert.

Das weitgehend von Kohlendioxid befreite Methanol, also regenerierte Methanol, wird über Leitung 49 aus der Regenerationsvorrichtung abgezogen und anschließend, wie oben ausgeführt, der Absorptionsvorrichtung A zur erneuten Absorption von Kohlendioxid zugeführt.

Von dem regenerierten Methanol in Leitung 49 wird ein geringfügiger Teilstrom über Leitung 50 abgezweigt und Leitung 43 zugeführt. Die Trennung von Methanol und Wasser in der thermischen Trennvorrichtung T ist niemals vollständig. Daher ist das über Leitung 45 abgezogene Wasser mit Methanol verunreinigt, wodurch Methanol-Verluste im über die Leitungen 42 und 43 sowie die Waschvorrichtung S und die thermische Trennvorrichtung T definierten Kreislauf auftreten. Diese Methanol-Verluste werden durch Zuführen von regeneriertem Methanol über Leitung 50 ausgeglichen.

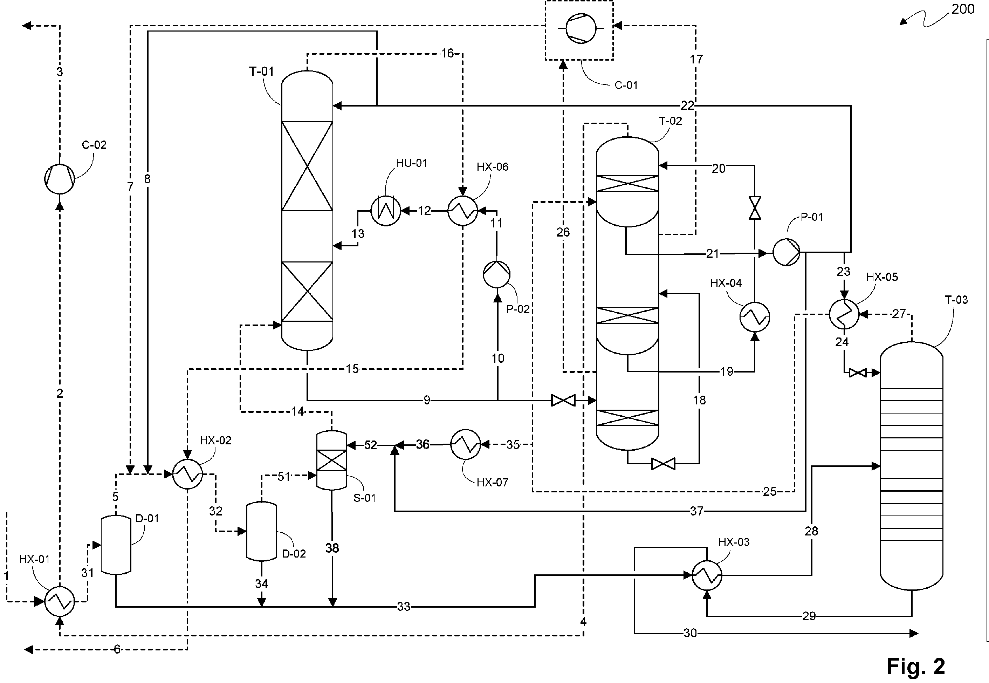

Figur 2 zeigt ein Verfahrensfließbild eines Verfahrens 200 oder einer Anlage für eine beispielhafte Ausgestaltung der Erfindung, in welchem zusätzliche Details im Vergleich zur stark vereinfachten Blockfließbilddarstellung gemäß Figur 1 gezeigt sind.

Zu reinigendes Synthesegas aus einer Reformereinheit, welches in einer der Reformereinheit nachgeschalteten Wassergas-Shift-Einheit (beides nicht gezeigt) behandelt wurde, wird über Leitung 1 herangeführt und zunächst in Wärmeaustauscher HX-01 mit Hilfe eines Kohlendioxid-Stroms aus Leitung 4 unter den Taupunkt von Wasser abgekühlt. Das gekühlte Synthesegas wird anschließend über Leitung 31 weitergeführt und kondensiertes Wasser wird aus dem Synthesegas in Abscheider D-01 abgeschieden. Synthesegas und nicht kondensiertes Wasser werden über Leitung 5 weitergeführt und in Wärmeaustauscher HX-02 weiter auf eine Temperatur von -10 °C gegen gereinigtes Synthesegas aus Leitung 15 abgekühlt. Um die Bildung von Eis in Leitung 5 und stromabwärts zu verhindern, wird über Leitung 8 Methanol zugeführt. In Wärmeaustauscher HX-02 auf -10 °C abgekühltes Synthesegas wird über Leitung 32 weitergeführt und in Abscheider D-02 eine weitere Menge Wasser aus dem Synthesegas abgeschieden, welche über Leitung 34 der Leitung 33 zugeführt wird.

Das durch Kondensation und Abscheidung teilweise von Wasser befreite und abgekühlte Synthesegas wird über Leitung 51 weitergeführt und in die Waschkolonne S-01 eingeschleust. Die Waschkolonne S-01 ist mit Glockenböden ausgestattet. In der Waschkolonne S-01 fließt das zu reinigende Synthesegas von unten nach oben, während über Leitung 52 eingeschleustes kaltes Methanol von oben nach unten fließt. Im gegenseitigen Stoffaustausch zwischen Synthesegas und Methanol wird im Synthesegas verbliebenes Wasser nahezu quantitativ in der Waschkolonne S-01 gelöst. Entsprechend wird ein Gemisch aus Methanol und Wasser über Leitung 38 aus dem Sumpfbereich der Waschkolonne S-01 abgezogen und Leitung 33 zugeführt, welche Wasser aus den Abscheidern D-01 und D-02 führt.

Das praktisch vollständig von Wasser befreite Synthesegas wird über Leitung 14 aus der Waschkolonne S-01 abgezogen und einer Absorptionskolonne T-01 zugeführt, in welcher es einem physikalischen Absorptionsschritt zur Entfernung von Kohlendioxid unterzogen wird. Absorptionskolonne T-01 wird bei einem Absorptionsdruck von 40 bar betrieben. In Absorptionskolonne T-01 wird kaltes Methanol als Absorptionsmittel aus den Leitungen 13 und 22 von oben nach unten geführt, während das Synthesegas aus Leitung 14 im Gegenstrom von unten nach oben geführt wird. Im Zuge des Stoffaustauschs zwischen Synthesegas und Methanol wird hauptsächlich Kohlendioxid in Methanol absorbiert, daneben werden in kleineren Mengen und nicht vermeidbar auch Wertgase, im vorliegenden Fall hauptsächlich Wasserstoff, in Methanol mitabsorbiert (co-absorbiert). Gereinigtes, das heißt weitgehend von Wasser und Kohlendioxid befreites Synthesegas wird aus der Absorptionskolonne T-01 über Leitung 16 abgezogen. Das Synthesegas kühlt anschließend eine Teilmenge von aus Leitung 9 mit Hilfe von Pumpe P-02 aus Leitung 10 abgezweigtem und über Leitung 11 weitergeführtem beladenem Methanol in Wärmeaustauscher HX-06. Das gereinigte Synthesegas wird anschließend über Leitung 15 weitergeführt und kühlt in Wärmeaustauscher HX-02 das noch weitgehend unbehandelte Synthesegas aus Leitung 5. Das gereinigte Synthesegas wird anschließend über Leitung 6 aus dem Verfahren abgezogen. Es wird optional einem weiteren Reinigungsschritt zugeführt, beispielsweise einer Druckwechseladsorptionsanlage (*pressure swing adsorption -* PSA) zur Produktion von reinem Wasserstoff. Der reine Wasserstoff kann anschließend einer weiteren Verwendung zugeführt werden, beispielsweise einer Anlage zur Methanol- oder Ammoniaksynthese (nicht gezeigt).

Im Sumpfbereich der Absorptionskolonne T-01 wird beladenes Methanol über Leitung 9 abgezogen. Das beladene Methanol enthält Kohlendioxid sowie in kleineren Mengen mitabsorbierte Wertgase, insbesondere Wasserstoff, als absorbierte Gaskomponenten. Ein Teil des beladenen Methanols wird aus Leitung 9 über Leitung 10 mit Hilfe von Pumpe P-02 abgezweigt, über Leitung 11 weitergeführt und in Wärmeaustauscher HX-06 gegen gereinigtes Synthesegas aus Leitung 16 gekühlt. Es wird anschließend über Leitung 12 weitergeführt und in Kältemittelverdampfer HU-01 auf -35 °C gekühlt. Das gekühlte beladene Methanol wird anschließend über Leitung 13 weitergeführt und zur erneuten Absorption von Kohlendioxid in Absorptionskolonne T-01 eingespeist, in welcher es mit regeneriertem Methanol aus Leitung 22 gemischt wird.

Der Hauptanteil des beladenen Methanols wird über Leitung 9 in eine Flash-Kolonne T-02 eingespeist. Dabei wird der Druck über das in Leitung 9 angeordnete Druckminderungsventil zunächst auf 18 bar gesenkt. Im unteren Teil der Flash-Kolonne werden aufgrund dieser Drucksenkung in einem ersten flash-Schritt zunächst im Wesentlichen mitabsorbierte Wertgase, insbesondere Wasserstoff, freigesetzt. Diese werden über Leitung 26 abgezogen und Kompressor C-01 zugeführt. Auf 18 bar entspanntes beladenes Methanol wird weiter über Leitung 18 geführt und über das in Leitung 18 angeordnete Druckminderungsventil auf 8 bar entspannt. Im mittleren Teil der flash-Kolonne werden aufgrund dieser weiteren Drucksenkung in einem zweiten flash-Schritt weiterhin im Wesentlichen mitabsorbierte Wertgase (Kohlenmonoxid und Wasserstoff) freigesetzt, die über Leitung 17 abgezogen und ebenfalls Kompressor C-01 zugeführt werden. Kompressor C-01 verdichtet die Wertgase aus den Leitungen 17 und 26 zurück auf Absorptionsdruck (40 bar). Die verdichteten Wertgase werden anschließend über die Leitungen 7, 5, 32, 51 und 14 in die Absorptionskolonne T-01 zurückgeführt.

Das aus der zweiten flash-Stufe über Leitung 19 abgezogene Methanol wird in Wärmeaustauscher HX-04 mit Hilfe eines Teils des rohen Synthesegases aus Leitung 1 (nicht gezeigt) angewärmt und über Leitung 20 in eine dritte flash-Stufe dem oberen Teil der flash-Kolonne zugeführt. Die dritte flash-Stufe ist eine der ersten und zweiten flash-Stufe nachgeschaltete flash-Stufe. In Leitung 20 ist ein weiteres Druckminderungsventil angeordnet, welches das beladenen Methanol, welches hauptsächlich noch Kohlendioxid als absorbierte Gaskomponenten enthält, auf 1,3 bar entspannt.

Der dritten flash-Stufe werden über Leitung 25 Methanol-Dämpfe aus einer Rektifikationskolonne T-03 zugeführt, welche über Leitung 27 aus dem Kopfbereich der Rektifikationskolonne T-03 abgezogen werden und zunächst in einem Wärmeaustauscher HX-05 leicht abgekühlt werden, ohne dass der Taupunkt erreicht wird. Die über Leitung 25 weitergeführten und in die dritte Flash-Stufe eingeschleusten Methanol-Dämpfe werden in dieser dritten flash-Stufe als Stripp-Medium verwendet, um die Menge des in der dritten flash-Stufe aus dem Absorptionsmittel ausgetriebenen (desorbierten) Kohlendioxids im Vergleich mit einer üblichen flash-Anordnung zu erhöhen. Die dritte flash-Stufe kann somit auch als Stripp-Stufe gesehen werden, wobei Methanol-Dämpfe als Stripp-Medium verwendet werden. Alternativ kann auch auf das Einleiten der Methanol-Dämpfe verzichtet werden und die dritte Flash-Stufe bei Unterdruck (Vakuum) betrieben werden, um die Menge an desorbiertem Kohlendioxid zu erhöhen, beziehungsweise die Restmenge an absorbiertem Kohlendioxid im regenerierten Methanol zu verringern. Eine Kombination aus beidem, also Nutzung von Unterdruck und Nutzung von Methanol-Dämpfen als Strippmedium, ist ebenfalls möglich.

Das in der dritten flash-Stufe desorbierte Kohlendioxid wird über Leitung 4 aus dieser flash-Stufe abgezogen. Es weist eine niedrige Temperatur von -36 °C auf und wird daher zum Kühlen des rohen Synthesegases aus Leitung 1 in Wärmeaustauscher HX-01 genutzt. Das Kohlendioxid-Produkt wird über Leitung 2 weitergeführt und durch Kompressor C-02 verdichtet. Das verdichtete Kohlendioxid kann anschließend gelagert (CCS) oder einer weiteren Verwendung zugeführt werden (CCU).

Das in der dritten flash-Stufe erhaltene Methanol weist nur noch einen geringfügigen Restgehalt an absorbiertem Kohlendioxid auf. Es wird über Leitung 21 aus der dritten flash-Stufe abgezogen und mit Hilfe von Pumpe P-01 auf Absorptionsdruck (40 bar) verdichtet. Es wird anschließend über Leitung 22 weitergeführt und zur erneuten Absorption von Kohlendioxid der Absorptionskolonne T-01 in deren Kopfbereich zugeführt.

Ein Teil der aus der Rektifikationskolonne abgezogenen Methanoldämpfe werden nicht als Stripp-Medium über Leitung 25 in die Flash-Kolonne T-02 eingeschleust, sondern über Leitung 35 abgezweigt und im Wärmeaustauscher HX-07 unter den Taupunkt von Methanol gekühlt. Das kondensierte Methanol wird über Leitung 36 weitergeführt und mit regeneriertem Methanol aus Leitung 37 zusammengeführt. Der resultierende Methanol-Strom wird über Leitung 52 weitegeführt und in einem oberen Bereich in die Waschkolonne S-01 eingeschleust. Die Leitungen 27, 35, 36, 52, 38, 28, sowie Teile der Leitungen 25 und 33, sowie die Rektifikationskolonne T-03, die Wärmeaustauscher HX-07 und HX-03, sowie die Waschkolonne S-01 bilden im Falle des Verfahrens 200 gemäß Figur 2 somit den bereits oben beschriebenen dedizierten Kreislauf zur Wasserentfernung aus dem zu reinigenden Synthesegas.

Das Gemisch aus Methanol und Wasser, welches über Leitung 33 geführt wird, wird der Rektifikationskolonne T-03 in einem mittleren Bereich zugeführt. Das Gemisch in Leitung 33 wird gebildet aus dem in den Abscheidern D-01 und D-02 abgeschiedenen Wasser und aus dem Sumpfbereich der Waschkolonne S-01 abgezogenen Wasser-Methanol-Gemischs. Besagtes Gemisch wird über Leitung 33 herangeführt und zunächst in Wärmeaustauscher HX-03 gegen heißes Wasser, welches die Rektifikationskolonne T-03 als Sumpfprodukt über Leitung 29 verlässt, angewärmt. Rektifikationskolonne T-03 wird weiterhin über einen Aufkocher mit Frischdampf beheizt (nicht gezeigt). In der Rektifikationskolonne T-03 findet im Wesentlichen eine Trennung von Methanol und Wasser statt, wobei die Methanol-Dämpfe die Rektifikationskolonne T-03 wie oben beschrieben über Leitung 27 als Kopfprodukt verlassen. Das abgetrennte Wasser verlässt die Rektifikationskolonne T-03 aus deren Sumpfbereich über Leitung 29, wird in Wärmeaustauscher HX-03 gekühlt und über Leitung 30 zur Aufarbeitung (nicht gezeigt) aus dem Verfahren ausgeschleust. Da dieses Wasser mit Methanol kontaminiert ist, ist es erforderlich, eine kleinere Menge regenerierten Methanols in den oben näher beschriebenen dedizierten Kreislauf zwecks Ausgleich der Massenbilanz einzuschleusen. Dies geschieht, in dem ein Teilstrom regeneriertes Methanol aus Leitung 21 über Leitung 37 abgezweigt und dieser Teilstrom mit dem Strom in Leitung 36 zum Strom in Leitung 52 zusammengeführt wird.

Die in der thermischen Trennvorrichtung im Kopfbereich erzeugten Methanoldämpfe können noch Rückstände von Wasser enthalten. Daher wird eine kleine Teilmenge regenerierten Methanols aus Leitung 21 abgezweigt und über Leitung 23, Wärmeaustauscher HX-05, und Leitung 24 nach Druckentspannung in die Rektifikationskolonne T-03 eingebracht, um die geringfügigen Restmengen an Wasser zurückzuwaschen. Dadurch wird vermieden, dass Wasser über die Leitungen 25 und 26 in die Flash-Kolonne T-02 und damit in den Hauptabsorptionsmittelkreislauf eingeschleppt wird.

Die folgende Tabelle gibt ein Zahlenbeispiel für zwei Ausführungsformen der Erfindung wieder. Es handelt sich dabei um Simulationsdaten, welche mit Hilfe der Software AspenPlus^{®} ermittelt wurden. Die zu entfernende Kohlendioxid-Menge und die Wasserkonzentration im Synthesegas ist in beiden Beispielen 1 und 2 gleich groß.

Beispiel 1 entspricht der Verfahrensführung gemäß Figur 2. Entsprechend wird zusätzlich zu dem aus der Rektifikationskolonne T-03 über Leitung 27 abgezogenen und anschließend über Leitung 36 zur Waschkolonne S-01 zugeführten Methanol der Waschkolonne S-01 auch regeneriertes Methanol über Leitung 37 zugeführt. Die Summe der Ströme der Leitungen 36 und 37 wird der Waschkolonne S-01 über Leitung 52 zugeführt. Gemäß Beispiel 2 fehlt der zusätzliche Methanol-Strom gemäß Leitung 37, das heißt die Waschkolonne S-01 wird alleine mit Methanol aus der Rektifikationskolonne T-03 (Leitung 36) gespeist. In der Tabelle ist weiterhin der Volumenstrom gemäß Leitung 21 aufgeführt, welcher dem Volumenstrom im Hauptabsorptionsmittelkreislauf entspricht.

| **Strom in Leitung-Nr.** | **Beschreibung** | **Beispiel 1 (kmol/hr)** | **Beispiel 2 (kmol/hr)** |
|---|---|---|---|
| 37 | Zusätzlicher Methanol-Strom für dedizierten Kreislauf zur Wasserentfernung | 33 | 0 |
| 36 | Methanol-Strom für dedizierten Kreislauf zur Wasserentfernung | 63 | 150 |
| 21 | Methanol-Strom im Hauptabsorptionsmittelkreislauf | 56994 | 62304 |

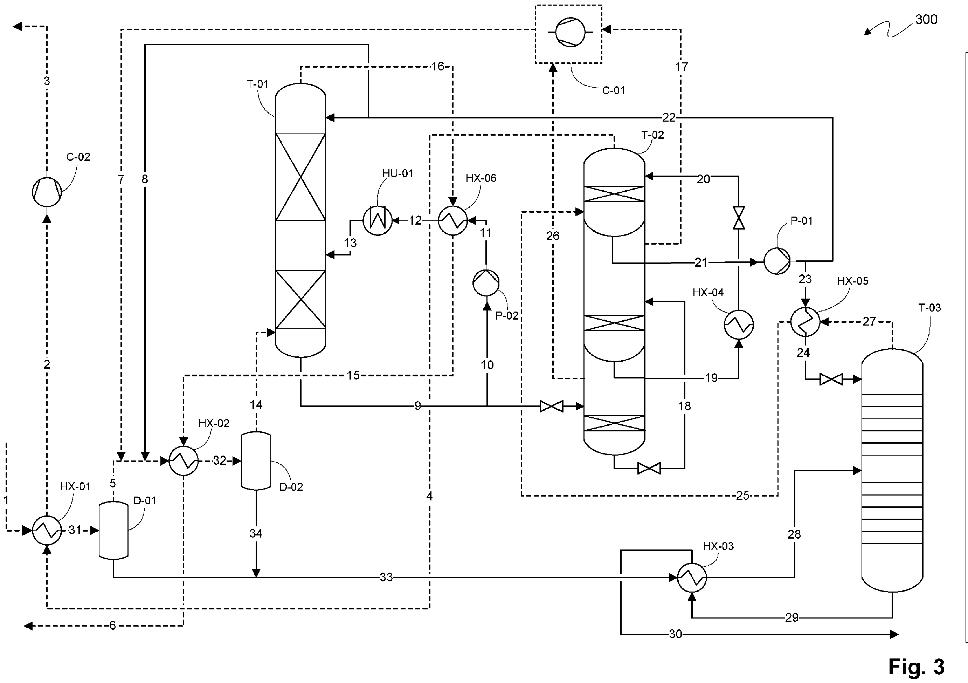

Figur 3 zeigt ein Verfahrensfließbild eines Verfahrens 300 oder einer Anlage ohne einen erfindungsgemäßen dedizierten Kreislauf zur Wasserentfernung.

In den Abscheidern D-01 und D-02 wird das im zu reinigenden Synthesegas enthaltene Wasser nicht vollständig entfernt. Aufgrund des Fehlens der Waschvorrichtung S-01 und des entsprechenden Kreislaufs wird dieses nicht kondensierte, nicht abgeschiedene Wasser unweigerlich über Leitung 14 in die Absorptionskolonne T-01 eingeschleust. Dadurch kann sich Wasser durch den ständigen Zustrom über Leitung 14 im Hauptabsorptionsmittelkreislauf, welcher im Wesentlichen durch die Absorptionskolonne T-01, die Flash-Kolonne T-02 und die verbindenden Leitungen gebildet wird, anreichern. Die Absorptionsfähigkeit des Methanols sinkt dadurch, ferner verschlechtert sich dessen Spezifität bezüglich der hauptsächlich zu entfernenden Gaskomponente Kohlendioxid.

Aus dem Grund der Anreicherung von Wasser in Methanol im Hauptabsorptionsmittelkreislauf wird ein signifikanter Teil des regenerierten Methanols aus Leitung 21 abgezweigt und über Leitung 23 zunächst in Wärmeaustauscher HX-05 gegen heiße Methanol-Dämpfe aus Leitung 27 erwärmt. Die Menge des über Leitung 23 abgezogenen Methanols wird so eingestellt, dass sich Wasser in Methanol im Kreislauf zwischen Absorptionskolonne T-01 und flash-Kolonne nicht anreichern kann, das heißt eine vordefinierte Grenzkonzentration nicht überschritten wird. Ein Betrieb des Verfahrens mit wasserfreiem Methanol im Hauptabsorptionsmittelkreislauf ist trotzdem nicht möglich. Das regenerierte Methanol wird anschließend über Leitung 24 einem oberen Bereich der Rektifikationskolonne T-03 zugeführt. In Leitung 24 ist ein Druckminderungsventil angeordnet, durch welches das Methanol auf 2 bar entspannt wird. Aufgrund dieser Verfahrensführung ist die Menge des in der Rektifikationskolonne T-03 gemäß Verfahren 300 zu verarbeitenden Methanol-Wasser-Gemischs wesentlich größer als die Menge des Gemischs, welche in der Rektifikationskolonne T-03 gemäß Verfahren 200 verarbeitet wird. Entsprechend ist der Energieaufwand und der apparative Aufwand gemäß Verfahren 300 diesbezüglich signifikant höher.

### Bezugszeichenliste

- 100, 200, 300: Verfahren
- 1 bis 52: Leitung
- A: Absorptionsvorrichtung
- D: Abscheidevorrichtung
- R: Regenerationsvorrichtung
- S: Waschvorrichtung
- T: Thermische Trennvorrichtung
- HX-01 bis HX-07: Wärmeaustauscher
- HU-01: Kältemittelverdampfer
- D-01, D-02: Abscheider
- S-01: Waschkolonne
- T-01: Absorptionskolonne
- T-02: Flash-Kolonne
- T-03: Rektifikationskolonne
- P-01, P-02: Pumpe
- C-01, C-02: Kompressor

## Patentansprüche

1. Verfahren zur Entfernung von Kohlendioxid (CO₂) und Wasser (H₂O) aus Synthesegas, wobei das Synthesegas zumindest Wasserstoff (H₂), Kohlendioxid (CO₂) und Wasser (H₂O) aufweist, umfassend die Schritte
(a) Bereitstellen eines physikalisch wirkenden Absorptionsmittels, insbesondere Methanol;
(b) Zuführen des Synthesegases zu einer Waschvorrichtung (S, S-01), insbesondere zu einer Waschkolonne, und Entfernen von im Synthesegas enthaltenem Wasser in der Waschvorrichtung (S, S-01) durch Waschen des Synthesegases mit der Waschvorrichtung (S, S-01) zugeführtem Absorptionsmittel, wodurch ein zumindest teilweise von Wasser befreites Synthesegas sowie ein Gemisch aus Absorptionsmittel und Wasser erhalten werden, und wobei das zumindest teilweise von Wasser befreite Synthesegas sowie das Gemisch aus Absorptionsmittel und Wasser aus der Waschvorrichtung (S, S-01) abgezogen werden;
(c) Zuführen des Gemischs aus Absorptionsmittel und Wasser zu einer thermischen Trennvorrichtung (T, T-03), und thermisches Trennen des Gemischs in der Trennvorrichtung (T, T-03) in Wasser und Absorptionsmittel, wobei das Wasser aus der thermischen Trennvorrichtung (T, T-03) abgezogen wird, und wobei das Absorptionsmittel aus der thermischen Trennvorrichtung (T, T-03) abgezogen und anschließend der Waschvorrichtung (S, S-01) zum Entfernen des im Synthesegas enthaltenen Wasser gemäß Schritt (b) zugeführt wird;
(d) Zuführen des zumindest teilweise von Wasser befreiten Synthesegases zu einer Absorptionsvorrichtung (A, T-01), und Entfernen von Kohlendioxid aus dem Synthesegas durch physikalische Absorption des Kohlendioxids im Absorptionsmittel bei Absorptionsdruck in der Absorptionsvorrichtung (A, T-01), wobei das Absorptionsmittel und das Synthesegas in der Absorptionsvorrichtung (A, T-01) im Gegenstrom geführt werden, wobei ein mit zumindest Kohlendioxid beladenes Absorptionsmittel und ein zumindest teilweise von Kohlendioxid und Wasser befreites Synthesegas erhalten werden, und wobei das mit zumindest Kohlendioxid beladene Absorptionsmittel und das zumindest teilweise von Kohlendioxid und Wasser befreite Synthesegas aus der Absorptionsvorrichtung (A, T-01) abgezogen werden;
(e) Entfernen von Kohlendioxid aus dem aus der Absorptionsvorrichtung (A, T-01) abgezogenen beladenen Absorptionsmittel durch Desorption des Kohlendioxids in einer Regenerationsvorrichtung (R, T-02) durch Druckabsenkung gegenüber dem Absorptionsdruck, wobei desorbiertes Kohlendioxid und zumindest teilweise regeneriertes Absorptionsmittel aus der Regenerationsvorrichtung (R, T-02) abgezogen werden, und wobei das zumindest teilweise regenerierte Absorptionsmittel zur Verwendung als Absorptionsmittel gemäß Schritt (d) zur Absorptionsvorrichtung (A, T-01) zurückgeführt wird.

2. Verfahren nach Anspruch 1, **dadurch gekennzeichnet, dass** eine Teilmenge des aus der Regenerationsvorrichtung (R, T-02) abgezogenen, zumindest teilweise regenerierten Absorptionsmittels der Waschkolonne (S, S-01) zum Entfernen von im Synthesegas enthaltenem Wasser zugeführt wird.

3. Verfahren nach Anspruch 1 oder 2, **dadurch gekennzeichnet, dass** das Synthesegas und das Absorptionsmittel in der Waschvorrichtung (S, S-01) im Gegenstrom geführt werden.

4. Verfahren nach einem der vorhergehenden Ansprüche, **dadurch gekennzeichnet, dass** das Synthesegas vor dem Zuführen zur Waschvorrichtung (S, S-01) unter den Taupunkt von Wasser gekühlt wird, und dadurch aus dem Synthesegas auskondensiertes Wasser in einer Abscheidevorrichtung (D, D-01, D-02) abgetrennt wird und der thermischen Trennvorrichtung (T, T-03) zugeführt wird.

5. Verfahren nach Anspruch 4, **dadurch gekennzeichnet, dass** Synthesegas aus der Abscheidevorrichtung (D, D-01, D-02) abgezogen wird und das aus der Abscheidevorrichtung (D, D-01, D-02) abgezogene Synthesegas der Waschvorrichtung (S, S-01) zum weiteren Entfernen von im Synthesegas enthaltenem Wasser zugeführt wird.

6. Verfahren nach einem der vorhergehenden Ansprüche, **dadurch gekennzeichnet, dass** aus der thermischen Trennvorrichtung (T, T-03) abgezogenes Absorptionsmittel gasförmig ist und unter den Taupunkt des Absorptionsmittels gekühlt wird, bevor es der Waschvorrichtung (S, S-01) zugeführt wird.

7. Verfahren nach einem der vorhergehenden Ansprüche, **dadurch gekennzeichnet, dass** ein Teilstrom des aus der thermischen Trennvorrichtung abgezogenen Absorptionsmittels in gasförmiger Form als Strippmedium zum Entfernen von Kohlendioxid aus dem beladenen Absorptionsmittel in der Regenerationsvorrichtung (R, T-02) genutzt wird.

8. Verfahren nach einem der Ansprüche 1 bis 6, **dadurch gekennzeichnet, dass** das Verfahren keinen Heißregenerationsschritt zum Regenerieren des beladenen Absorptionsmittels umfasst.

9. Verfahren nach einem der Ansprüche 1 bis 8, **dadurch gekennzeichnet, dass** eine Teilmenge des aus der Regenerationsvorrichtung (R, T-02) abgezogenen, zumindest teilweise regenerierten Absorptionsmittels der thermischen Trennvorrichtung (T, T-03) zugeführt wird, wobei Wasserrückstände aus dem Absorptionsmittel durch Waschen mit dem zumindest teilweise regenerierten Absorptionsmittel in der thermischen Trennvorrichtung (T, T-03) entfernt werden, bevor das Absorptionsmittel aus der thermischen Trennvorrichtung (T, T-03) gemäß Schritt (c) abgezogen wird.

10. Anlage zur Entfernung von Kohlendioxid (CO₂) und Wasser (H₂O) aus Synthesegas, wobei das Synthesegas zumindest Wasserstoff (H₂), Kohlendioxid (CO₂) und Wasser (H₂O) aufweist, umfassend folgende miteinander in Wirkverbindung stehende Anlagenkomponenten:
(a) Mittel zum Bereitstellen eines physikalisch wirkenden Absorptionsmittels, insbesondere Methanol;
(b) Eine Waschvorrichtung (S, S-01), insbesondere eine Waschkolonne, und Mittel zum Zuführen des Synthesegases und zum Zuführen von Absorptionsmittel zur Waschvorrichtung (S, S-01), wobei die Waschvorrichtung (S, S-01) zum Entfernen von im Synthesegas enthaltenen Wasser durch Waschen des Synthesegases mit Absorptionsmittel konfiguriert ist, wodurch ein zumindest teilweise von Wasser befreites Synthesegas sowie ein Gemisch aus Absorptionsmittel und Wasser in der Waschvorrichtung (S, S-01) erhältlich sind, und Mittel zum Abziehen des zumindest teilweise von Wasser befreiten Synthesegases und des Gemischs aus Absorptionsmittel und Wasser aus der Waschvorrichtung (S, S-01);
(c) Eine thermische Trennvorrichtung (T, T-03), und Mittel zum Zuführen des Gemischs aus Absorptionsmittel und Wasser zur thermischen Trennvorrichtung (T, T-03), wobei das Gemisch aus Absorptionsmittel und Wasser in der Trennvorrichtung (T, T-03) in Wasser und Absorptionsmittel trennbar ist, und Mittel zum Abziehen des Wassers aus der thermischen Trennvorrichtung (T, T-03), und Mittel zum Abziehen des Absorptionsmittels aus der thermischen Trennvorrichtung (T, T-03) und zum Zuführen des Absorptionsmittels zur Waschvorrichtung (S, S-01) gemäß (b) zum Entfernen des im Synthesegas enthaltenen Wassers in der Waschvorrichtung (S, S-01);
(d) Eine Absorptionsvorrichtung (A, T-01), und Mittel zum Zuführen des zumindest teilweise von Wasser befreiten Synthesegases zur Absorptionsvorrichtung (A, T-01), wobei die Absorptionsvorrichtung (A, T-01) so konfiguriert ist, dass Kohlendioxid aus dem Synthesegas durch physikalische Absorption des Kohlendioxids im Absorptionsmittel bei Absorptionsdruck entfernbar ist, und wobei das Absorptionsmittel und das Synthesegas in der Absorptionsvorrichtung (A, T-01) im Gegenstrom führbar sind, wobei ein mit zumindest Kohlendioxid beladenes Absorptionsmittel und ein zumindest teilweise von Kohlendioxid und Wasser befreites Synthesegas erhältlich sind, und Mittel zum Abziehen des mit zumindest Kohlendioxid beladenen Absorptionsmittel und des zumindest teilweise von Kohlendioxid und Wasser befreiten Synthesegases aus der Absorptionsvorrichtung (A, T-01);
(e) Eine Regenerationsvorrichtung (R, T-02), wobei die Regenerationsvorrichtung (R, T-02) zum Entfernen von Kohlendioxid aus dem aus der Absorptionsvorrichtung (A, T-01) abziehbaren beladenen Absorptionsmittel durch Desorption des Kohlendioxids durch Druckabsenkung gegenüber dem Absorptionsdruck konfiguriert ist, wodurch ein zumindest teilweise regeneriertes Absorptionsmittel erhältlich ist, Mittel zum Abziehen des desorbierten Kohlendioxids und des zumindest teilweise regenerierten Absorptionsmittels aus der Regenerationsvorrichtung (R, T-02), und Mittel zum Zurückführen des zumindest teilweise regenerierten Absorptionsmittels zur Absorptionsvorrichtung (A, T-01) gemäß (d) zur Verwendung als Absorptionsmittel.

11. Anlage nach Anspruch 10, **dadurch gekennzeichnet, dass** die Anlage Mittel zum Zuführen einer Teilmenge des aus der Regenerationsvorrichtung abziehbaren, zumindest teilweise regenerierten Absorptionsmittels zur Waschkolonne (S, S-01) zum Entfernen von im Synthesegas enthaltenen Wasser umfasst.

12. Anlage nach Anspruch 10 oder 11, **dadurch gekennzeichnet, dass** stromaufwärts zur Waschvorrichtung (S, S-01) in Flussrichtung des Synthesegases nacheinander ein Wärmeaustauscher (HX-02) und eine Abscheidevorrichtung (D, D-02), insbesondere ein Flüssigkeitsabscheider, angeordnet sind, wobei der Wärmeaustauscher (HX-02) zum Kühlen des Synthesegases unter den Taupunkt von Wasser konfiguriert ist, und die Abscheidevorrichtung (D, D-02) zum Abscheiden des auskondensierten Wassers aus dem Synthesegas konfiguriert ist, und wobei die Anlage Mittel zum Zuführen des in der Abscheidevorrichtung (D, D-02) auskondensierten Wassers zur thermischen Trennvorrichtung (T, T-03) umfasst.

13. Anlage nach Anspruch 12, **dadurch gekennzeichnet, dass** die Anlage Mittel zum Abziehen von Synthesegas aus der Abscheidevorrichtung (D, D-02) umfasst, und Mittel zum Zuführen des aus der Abscheidevorrichtung (D, D-02) abziehbaren Synthesegases zur Waschvorrichtung (S, S-01) zum weiteren Entfernen von im Synthesegas enthaltenen Wasser umfasst.

14. Anlage nach einem der Ansprüche 10 bis 13, **dadurch gekennzeichnet, dass** die Anlage Mittel zum Kühlen von aus der thermischen Trennvorrichtung (T, T-03) abziehbarem gasförmigem Absorptionsmittel umfasst, wobei die Mittel so konfiguriert sind, dass das Absorptionsmittel unter den Taupunkt des Absorptionsmittels kühlbar ist.

15. Anlage nach einem der Ansprüche 10 bis 14, **dadurch gekennzeichnet, dass** die Anlage Mittel zum Abziehen von gasförmigem Absorptionsmittel aus der thermischen Trennvorrichtung (T, T-03) umfasst, und Mittel zum Zuführen des gasförmigen Absorptionsmittels zur Regenerationsvorrichtung (R, T-02) als Strippmedium umfasst, zum Entfernen von Kohlendioxid aus dem beladenen Absorptionsmittel in der Regenerationsvorrichtung (R, T-02) durch Strippen.

16. Anlage nach einem der Ansprüche 10 bis 14, **dadurch gekennzeichnet, dass** die Anlage keine Mittel zum Heißregenerieren des beladenen Absorptionsmittels umfasst.

17. Anlage nach einem der Ansprüche 10 bis 16, **dadurch gekennzeichnet, dass** die Anlage Mittel zum Abziehen einer Teilmenge des aus der Regenerationsvorrichtung (R, T-02) abziehbaren, zumindest teilweise regenerierten Absorptionsmittels umfasst, und Mittel zum Zuführen des zumindest teilweise regenerierten Absorptionsmittels zur thermischen Trennvorrichtung (T, T-03) umfasst, wodurch Wasserrückstände aus dem Absorptionsmittel durch Waschen mit dem zumindest teilweise regenerierten Absorptionsmittel in der thermischen Trennvorrichtung (T, T-03) entfernbar sind, und wobei die Anlage Mittel zum Abziehen des von Wasserrückständen befreiten Absorptionsmittels aus der thermischen Trennvorrichtung (T, T-03) umfasst.

## Claims

1. Process for removing carbon dioxide (CO₂) and water (H₂O) from synthesis gas, wherein the synthesis gas comprises at least hydrogen (H₂), carbon dioxide (CO₂) and water (H₂O), comprising the steps of
(a) providing a physical absorption medium, in particular methanol;
(b) supplying the synthesis gas to a scrubbing apparatus (S, S-01), in particular to a scrubbing column, and removing water present in the synthesis gas in the scrubbing apparatus (S, S-01) by scrubbing the synthesis gas with absorption medium supplied to the scrubbing apparatus (S, S-01) to obtain a synthesis gas at least partially freed of water and a mixture of absorption medium and water, and wherein the synthesis gas at least partially freed of water and the mixture of absorption medium and water are withdrawn from the scrubbing apparatus (S, S-01);
(c) supplying the mixture of absorption medium and water to a thermal separation apparatus (T, T-03) and thermally separating the mixture in the separation apparatus (T, T-03) into water and absorption medium, wherein the water is withdrawn from the thermal separation apparatus (T, T-03) and wherein the absorption medium is withdrawn from the thermal separation apparatus (T, T-03) and subsequently supplied to the scrubbing apparatus (S, S-01) for removing the water present in the synthesis gas according to step (b);
(d) supplying the synthesis gas at least partially freed of water to an absorption apparatus (A, T-01) and removing carbon dioxide from the synthesis gas by physical absorption of the carbon dioxide in the absorption medium at absorption pressure in the absorption apparatus (A, T-01), wherein the absorption medium and the synthesis gas are run in countercurrent in the absorption apparatus (A, T-01) to obtain an absorption medium laden at least with carbon dioxide and a synthesis gas at least partially freed of carbon dioxide and water, and wherein the absorption medium laden at least with carbon dioxide and the synthesis gas at least partially freed of carbon dioxide and water are withdrawn from the absorption apparatus (A, T-01);
(e) removing carbon dioxide from the laden absorption medium withdrawn from the absorption apparatus (A, T-01) by desorption of the carbon dioxide in a regeneration apparatus (R, T-02) by pressure reduction relative to the absorption pressure, wherein desorbed carbon dioxide and at least partially regenerated absorption medium are withdrawn from the regeneration apparatus (R, T-02) and wherein the at least partially regenerated absorption medium is recycled to the absorption apparatus (A, T-01) for use as absorption medium according to step (d).

2. Process according to Claim 1, **characterized in that** a subamount of the at least partially regenerated absorption medium withdrawn from the regeneration apparatus (R, T-02) is supplied to the scrubbing column (S, S-01) for removal of water present in the synthesis gas.

3. Process according to Claim 1 or 2, **characterized in that** the synthesis gas and the absorption medium are run in countercurrent in the scrubbing apparatus (S, S-01).

4. Process according to any of the preceding claims, **characterized in that** prior to being supplied to the scrubbing apparatus (S, S-01) the synthesis gas is cooled to below the dew point of water with the result that water condensed out of the synthesis gas is separated in a separation apparatus (D, D-01, D-02) and supplied to the thermal separation apparatus (T, T-03).

5. Process according to Claim 4, **characterized in that** synthesis gas is withdrawn from the separation apparatus (D, D-01, D-02) and the synthesis gas withdrawn from the separation apparatus (D, D-01, D-02) is supplied to the scrubbing apparatus (S, S-01) for further removal of water present in the synthesis gas.

6. Process according to any of the preceding claims, **characterized in that** absorption medium withdrawn from the thermal separation apparatus (T, T-03) is gaseous and is cooled to below the dew point of the absorption medium before it is supplied to the scrubbing apparatus (S, S-01) .

7. Process according to any of the preceding claims, **characterized in that** a substream of the absorption medium withdrawn from the thermal separation apparatus is utilized in gaseous form as stripping medium for removal of carbon dioxide from the laden absorption medium in the regeneration apparatus (R, T-02).

8. Process according to any of Claims 1 to 6, **characterized in that** the process comprises no hot regeneration step for regenerating the laden absorption medium.

9. Process according to any of Claims 1 to 8, **characterized in that** a subamount of the at least partially regenerated absorption medium withdrawn from the regeneration apparatus (R, T-02) is supplied to the thermal separation apparatus (T, T-03), wherein water residues are removed from the absorption medium by scrubbing with the at least partially regenerated absorption medium in the thermal separation apparatus (T, T-03) before the absorption medium is withdrawn from the thermal separation apparatus (T, T-03) according to step (c) .

10. Plant for removing carbon dioxide (CO₂) and water (H₂O) from synthesis gas, wherein the synthesis gas comprises at least hydrogen (H₂), carbon dioxide (CO₂) and water (H₂O), comprising the following plant components in operative connection with one another:
(a) means for providing a physical absorption medium, in particular methanol;
(b) a scrubbing apparatus (S, S-01), in particular a scrubbing column, and means for supplying the synthesis gas and for supplying absorption medium to the scrubbing apparatus (S, S-01), wherein the scrubbing apparatus (S, S-01) is configured for removing water present in the synthesis gas by scrubbing the synthesis gas with absorption medium, thus making it possible to obtain in the scrubbing apparatus (S, S-01) a synthesis gas at least partially freed of water and a mixture of absorption medium and water, and means for withdrawing the synthesis gas at least partially freed of water and the mixture of absorption medium and water from the scrubbing apparatus (S, S-01);
(c) a thermal separation apparatus (T, T-03) and means for supplying the mixture of absorption medium and water to the thermal separation apparatus (T, T-03), wherein the mixture of absorption medium and water is separable into water and absorption medium in the separation apparatus (T, T-03), and means for withdrawing the water from the thermal separation apparatus (T, T-03) and means for withdrawing the absorption medium from the thermal separation apparatus (T, T-03) and for supplying the absorption medium to the scrubbing apparatus (S, S-01) according to (b) to remove the water present in the synthesis gas in the scrubbing apparatus (S, S-01);
(d) an absorption apparatus (A, T-01) and means for supplying the synthesis gas at least partially freed of water to the absorption apparatus (A, T-01), wherein the absorption apparatus (A, T-01) is configured such that carbon dioxide is removable from the synthesis gas by physical absorption of the carbon dioxide in the absorption medium at absorption pressure and wherein the absorption medium and the synthesis gas may be run in countercurrent in the absorption apparatus (A, T-01), thus making it possible to obtain an absorption medium laden at least with carbon dioxide and a synthesis gas at least partially freed of carbon dioxide and water, and means for withdrawing the absorption medium laden at least with carbon dioxide and the synthesis gas at least partially freed of carbon dioxide and water from the absorption apparatus (A, T-01);
(e) a regeneration apparatus (R, T-02), wherein the regeneration apparatus (R, T-02) is configured for removing carbon dioxide from the laden absorption medium withdrawable from the absorption apparatus (A, T-01) by desorption of the carbon dioxide by pressure reduction relative to the absorption pressure, thus making it possible to obtain an at least partially regenerated absorption medium, means for withdrawing the desorbed carbon dioxide and the at least partially regenerated absorption medium from the regeneration apparatus (R, T-02) and means for recycling the at least partially regenerated absorption medium to the absorption apparatus (A, T-01) according to (d) for use as absorption medium.

11. Plant according to Claim 10, **characterized in that** the plant comprises means for supplying a subamount of the at least partially regenerated absorption medium withdrawable from the regeneration apparatus to the scrubbing column (S, S-01) for removal of water present in the synthesis gas.

12. Plant according to Claim 10 or 11, **characterized in that** upstream of the scrubbing apparatus (S, S-01) in the flow direction of the synthesis gas a heat exchanger (HX-02) and a separation apparatus (D, D-02), in particular a liquid separator, are arranged successively, wherein the heat exchanger (HX-02) is configured for cooling the synthesis gas to below the dew point of water and the separation apparatus (D, D-02) is configured for separating the condensed-out water from the synthesis gas and wherein the plant comprises means for supplying the water condensed out in the separation apparatus (D, D-02) to the thermal separation apparatus (T, T-03).

13. Plant according to Claim 12, **characterized in that** the plant comprises means for withdrawing synthesis gas from the separation apparatus (D, D-02) and means for supplying the synthesis gas withdrawable from the separation apparatus (D, D-02) to the scrubbing apparatus (S, S-01) for further removal of water present in the synthesis gas.

14. Plant according to any of Claims 10 to 13, **characterized in that** the plant comprises means for cooling gaseous absorption medium withdrawable from the thermal separation apparatus (T, T-03), wherein the means are configured such that the absorption medium is coolable to below the dew point of the absorption medium.

15. Plant according to any of Claims 10 to 14, **characterized in that** the plant comprises means for withdrawing gaseous absorption medium from the thermal separation apparatus (T, T-03) and means for supplying the gaseous absorption medium to the regeneration apparatus (R, T-02) as stripping medium for removal of carbon dioxide from the laden absorption medium in the regeneration apparatus (R, T-02) by stripping.

16. Plant according to any of Claims 10 to 14, **characterized in that** the plant comprises no means for hot regeneration of the laden absorption medium.

17. Plant according to any of Claims 10 to 16, **characterized in that** the plant comprises means for withdrawing a subamount of the at least partially regenerated absorption medium withdrawable from the regeneration apparatus (R, T-02) and means for supplying the at least partially regenerated absorption medium to the thermal separation apparatus (T, T-03), thus making it possible to remove water residues from the absorption medium by scrubbing with the at least partially regenerated absorption medium in the thermal separation apparatus (T, T-03), and wherein the plant comprises means for withdrawing the absorption medium freed of water residues from the thermal separation apparatus (T, T-03).

## Revendications

1. Procédé d'élimination de dioxyde de carbone (CO₂) et d'eau (H₂O) à partir de gaz de synthèse, le gaz de synthèse présentant au moins de l'hydrogène (H₂), du dioxyde de carbone (CO₂) et de l'eau (H₂O), comprenant les étapes
(a) mise à disposition d'un agent d'absorption à action physique, en particulier du méthanol ;
(b) fourniture du gaz de synthèse à un dispositif de lavage (S, S-01), en particulier à une colonne de lavage, et élimination de l'eau contenue dans le gaz de synthèse dans le dispositif de lavage (S, S-01) par lavage du gaz de synthèse à l'aide de l'agent d'absorption fourni au dispositif de lavage (S, S-01), suite à quoi un gaz de synthèse au moins partiellement libéré d'eau ainsi qu'un mélange d'agent d'absorption et d'eau sont obtenus, et le gaz de synthèse au moins partiellement libéré d'eau ainsi que le mélange d'agent d'absorption et d'eau étant soutirés à partir du dispositif de lavage (S, S-01) ;
(c) fourniture du mélange d'agent d'absorption et d'eau à un dispositif de séparation thermique (T, T-03) et séparation thermique du mélange dans le dispositif de séparation (T, T-03) en eau et en agent d'absorption, l'eau étant soutirée à partir du dispositif de séparation thermique (T, T-03) et l'agent d'absorption étant soutiré à partir du dispositif de séparation thermique (T, T-03) et ensuite fourni au dispositif de lavage (S, S-01) pour l'élimination de l'eau contenue dans le gaz de synthèse selon l'étape (b) ;
(d) fourniture du gaz de synthèse au moins partiellement libéré d'eau à un dispositif d'absorption (A, T-01) et élimination de dioxyde de carbone à partir du gaz de synthèse par absorption physique du dioxyde de carbone dans l'agent d'absorption à une pression d'absorption dans le dispositif d'absorption (A, T-01), l'agent d'absorption et le gaz de synthèse étant guidés à contre-courant dans le dispositif d'absorption (A, T-01), un agent d'absorption au moins chargé de dioxyde de carbone et un gaz de synthèse au moins partiellement libéré de dioxyde de carbone et d'eau étant obtenus et l'agent d'absorption au moins chargé de dioxyde de carbone et le gaz de synthèse au moins partiellement libéré de dioxyde de carbone et d'eau étant soutirés à partir du dispositif d'absorption (A, T-01) ;
(e) élimination de dioxyde de carbone à partir de l'agent d'absorption chargé soutiré à partir du dispositif d'absorption (A, T-01) par désorption du dioxyde du carbone dans un dispositif de régénération (R, T-02) par diminution de la pression par rapport à la pression d'absorption, le dioxyde de carbone désorbé et l'agent d'absorption au moins partiellement régénéré étant soutirés à partir du dispositif de régénération (R, T-02) et l'agent d'absorption au moins partiellement régénéré étant recyclé dans le dispositif d'absorption (A, T-01) pour une utilisation comme agent d'absorption selon l'étape (d).

2. Procédé selon la revendication 1, **caractérisé en ce qu'**une quantité partielle de l'agent d'absorption au moins partiellement régénéré, soutiré à partir du dispositif de régénération (R, T-02), est fourni à la colonne de lavage (S, S-01) pour l'élimination d'eau contenue dans le gaz de synthèse.

3. Procédé selon les revendications 1 ou 2, **caractérisé en ce que** le gaz de synthèse et l'agent d'absorption sont guidés à contre-courant dans le dispositif de lavage (S, S-01).

4. Procédé selon l'une des revendications précédentes, **caractérisé en ce que** le gaz de synthèse est refroidi sous le point de rosée de l'eau avant la fourniture au dispositif de lavage (S, S-01) et l'eau ainsi séparée par condensation du gaz de synthèse est séparée dans un dispositif séparateur (D, D-01, D-02) et fournie au dispositif de séparation thermique (T, T-03).

5. Procédé selon la revendication 4, **caractérisé en ce que** le gaz de synthèse est soutiré à partir du dispositif séparateur (D, D-01, D-02) et le gaz de synthèse soutiré à partir du dispositif séparateur (D, D-01, D-02) est fourni au dispositif de lavage (S, S-01) pour l'élimination supplémentaire d'eau contenue dans le gaz de synthèse.

6. Procédé selon l'une des revendications précédentes, **caractérisé en ce que** l'agent d'absorption soutiré à partir du dispositif de séparation thermique (T, T-03) est gazeux et est refroidi sous le point de rosée de l'agent d'absorption, avant d'être fourni au dispositif de lavage (S, S-01).

7. Procédé selon l'une des revendications précédentes, **caractérisé en ce qu'**un flux partiel de l'agent d'absorption soutiré à partir du dispositif de séparation thermique est utilisé sous forme gazeuse en tant qu'agent d'extraction pour l'élimination de dioxyde de carbone à partir de l'agent d'absorption chargé dans le dispositif de régénération (R, T-02).

8. Procédé selon l'une des revendications 1 à 6, **caractérisé en ce que** le procédé ne comprend pas d'étape de régénération à chaud pour la régénération de l'agent d'absorption chargé.

9. Procédé selon l'une des revendications 1 à 8, **caractérisé en ce qu'**une quantité partielle de l'agent d'absorption au moins partiellement régénéré, soutiré à partir du dispositif de régénération (R, T-02), est fourni au dispositif de séparation thermique (T, T-03), des résidus d'eau étant éliminés à partir de l'agent d'absorption par lavage avec l'agent d'absorption au moins partiellement régénéré dans le dispositif de séparation thermique (T, T-03), avant le soutirage de l'agent d'absorption à partir du dispositif de séparation thermique (T, T-03) selon l'étape (c).

10. Installation destinée à l'élimination de dioxyde de carbone (CO₂) et d'eau (H₂O) à partir de gaz de synthèse, le gaz de synthèse présentant au moins de l'hydrogène (H₂), du dioxyde de carbone (CO₂) et de l'eau (H₂O), comprenant les composants d'installation suivants, en liaison fonctionnelle les uns avec les autres :
(a) des moyens destinés à mettre à disposition un agent d'absorption à action physique, en particulier du méthanol ;
(b) un dispositif de lavage (S, S-01), en particulier une colonne de lavage, et des moyens destinés à fournir le gaz de synthèse et à fournir de l'agent d'absorption au dispositif de lavage (S, S-01), le dispositif de lavage (S, S-01) étant conçu pour éliminer l'eau contenue dans le gaz de synthèse par lavage du gaz de synthèse avec de l'agent d'absorption, suite à quoi un gaz de synthèse au moins partiellement libéré d'eau ainsi qu'un mélange d'agent d'absorption et d'eau peuvent être obtenus dans le dispositif de lavage (S, S-01), et des moyens destinés à soutirer le gaz de synthèse au moins partiellement libéré d'eau et le mélange d'agent d'absorption et d'eau à partir du dispositif de lavage (S, S-01) ;
(c) un dispositif de séparation thermique (T, T-03) et des moyens destinés à fournir le mélange d'agent d'absorption et d'eau au dispositif de séparation thermique (T, T-03), le mélange d'agent d'absorption et d'eau pouvant être séparé dans le dispositif de séparation (T, T-03) en eau et en agent d'absorption, et des moyens destinés à soutirer l'eau à partir du dispositif de séparation thermique (T, T-03) et des moyens destinés à soutirer l'agent d'absorption à partir du dispositif de séparation thermique (T, T-03) et à fournir l'agent d'absorption au dispositif de lavage (S, S-01) selon (b) pour l'élimination de l'eau contenue dans le gaz de synthèse dans le dispositif de lavage (S, S-01) ;
(d) un dispositif d'absorption (A, T-01) et des moyens destinés à fournir le gaz de synthèse au moins partiellement libéré d'eau au dispositif d'absorption (A, T-01), le dispositif d'absorption (A, T-01) étant conçu de telle sorte que du dioxyde de carbone peut être éliminé à partir du gaz de synthèse par absorption physique du dioxyde de carbone dans l'agent d'absorption à une pression d'absorption et l'agent d'absorption et le gaz de synthèse pouvant être guidés à contre-courant dans le dispositif d'absorption (A, T-01), un agent d'absorption au moins chargé de dioxyde de carbone et un gaz de synthèse au moins partiellement libéré de dioxyde de carbone et d'eau pouvant être obtenus, et des moyens destinés à soutirer l'agent d'absorption au moins chargé de dioxyde de carbone et le gaz de synthèse au moins partiellement libéré de dioxyde de carbone et d'eau à partir du dispositif d'absorption (A, T-01) ;
(e) un dispositif de régénération (R, T-02), le dispositif de régénération (R, T-02) étant conçu pour éliminer le dioxyde de carbone à partir de l'agent d'absorption chargé pouvant être soutiré à partir du dispositif d'absorption (A, T-01) par désorption du dioxyde de carbone par diminution de la pression par rapport à la pression d'absorption, suite à quoi un agent d'absorption au moins partiellement régénéré peut être obtenu, des moyens destinés à soutirer le dioxyde de carbone désorbé et l'agent d'absorption au moins partiellement régénéré à partir du dispositif d'absorption (R, T-02) et des moyens destinés à recycler l'agent d'absorption au moins partiellement régénéré dans le dispositif d'absorption (A, T-01) selon (d) pour une utilisation comme agent d'absorption.

11. Installation selon la revendication 10, **caractérisée en ce que** l'installation comprend des moyens destinés à fournir une quantité partielle de l'agent d'absorption au moins partiellement régénéré, pouvant être soutiré à partir du dispositif de régénération, à la colonne de lavage (S, S-01) pour l'élimination d'eau contenue dans le gaz de synthèse.

12. Installation selon la revendication 10 ou 11, **caractérisée en ce qu'**un échangeur de chaleur (HX-02) et un dispositif séparateur (D, D-02), en particulier un séparateur de liquide, sont disposés consécutivement en aval du dispositif de lavage (S, S-01) dans le sens d'écoulement du gaz de synthèse, l'échangeur de chaleur (HX-02) étant conçu pour refroidir le gaz de synthèse sous le point de rosée de l'eau et le dispositif séparateur (D, D-02) étant conçu pour séparer l'eau séparée par condensation à partir du gaz de synthèse et l'installation comprenant des moyens destinés à fournir l'eau séparée par condensation dans le dispositif séparateur (D, D-02) au dispositif de séparation thermique (T, T-03).

13. Installation selon la revendication 12, **caractérisée en ce que** l'installation comprend des moyens destinés à soutirer du gaz de synthèse à partir du dispositif séparateur (D, D-02) et des moyens destinés à fournir le gaz de synthèse pouvant être soutiré à partir du dispositif séparateur (D, D-02) au dispositif de lavage (S, S-01) pour l'élimination supplémentaire d'eau contenue dans le gaz de synthèse.

14. Installation selon l'une des revendications 10 à 13, **caractérisée en ce que** l'installation comprend des moyens destinés à refroidir l'agent d'absorption gazeux pouvant être soutiré à partir du dispositif de séparation thermique (T, T-03), les moyens étant conçus de telle sorte que l'agent d'absorption peut être refroidi sous le point de rosée de l'agent d'absorption.

15. Installation selon l'une des revendications 10 à 14, **caractérisée en ce que** l'installation comprend des moyens destinés à soutirer l'agent d'absorption gazeux à partir du dispositif de séparation thermique (T, T-03) et des moyens destinés à fournir l'agent d'absorption gazeux au dispositif de régénération (R, T-02) en tant qu'agent d'extraction pour l'élimination par extraction de dioxyde de carbone à partir de l'agent d'absorption chargé dans le dispositif de régénération (R, T-02).

16. Installation selon l'une des revendications 10 à 14, **caractérisée en ce que** l'installation ne comprend pas de moyens destinés à régénérer à chaud l'agent d'absorption chargé.

17. Installation selon l'une des revendications 10 à 16, **caractérisée en ce que** l'installation comprend des moyens destinés à soutirer une quantité partielle de l'agent d'absorption au moins partiellement régénéré, pouvant être soutiré à partir du dispositif de régénération (R, T-02), et des moyens destinés à fournir l'agent d'absorption au moins partiellement régénéré au dispositif de séparation thermique (T, T-03), suite à quoi des résidus d'eau peuvent être éliminés à partir de l'agent d'absorption par lavage avec l'agent d'absorption au moins partiellement régénéré dans le dispositif de séparation thermique (T, T-03) et l'installation comprenant des moyens destinés à soutirer l'agent d'absorption libéré des résidus d'eau à partir du dispositif de séparation thermique (T, T-03).
